(19) Europäisches Patentamt
European Patent Office
Office européen des brevets

(11) **EP 2 924 868 B1**

(12) **EUROPÄISCHE PATENTSCHRIFT**

(45) Veröffentlichungstag und Bekanntmachung des Hinweises auf die Patenterteilung:
**25.01.2017 Patentblatt 2017/04**

(51) Int Cl.:
***H02N 2/06*** *(2006.01)*

(21) Anmeldenummer: **15157750.9**

(22) Anmeldetag: **05.03.2015**

(54) **SCHALTUNG UND VERFAHREN ZUM ANSTEUERN EINES PIEZOAKTORS**

CIRCUIT AND METHOD FOR DRIVING A PIEZOELECTRIC ACTUATOR

CIRCUIT ET PROCÉDÉ DE COMMANDE D'UN ACTIONNEUR PIÉZOÉLECTRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.03.2014 DE 102014205807**

(43) Veröffentlichungstag der Anmeldung:
**30.09.2015 Patentblatt 2015/40**

(73) Patentinhaber: **ROBERT BOSCH GMBH**
**70442 Stuttgart (DE)**

(72) Erfinder:
• **Krayl, Oliver**
**70839 Gerlingen (DE)**
• **Leidich, Stefan**
**71277 Rutesheim (DE)**

(56) Entgegenhaltungen:
WO-A1-2011/099272     DE-A1-102009 028 915
US-A- 4 628 275     US-A- 6 011 345

EP 2 924 868 B1

**Beschreibung**

Stand der Technik

Die vorliegende Erfindung bezieht sich auf eine Brückenschaltung zum Ansteuern eines Piezoaktors, auf ein Verfahren zum Ansteuern eines Piezoaktors, auf ein entsprechendes Steuergerät sowie auf ein entsprechendes Computerprogrammprodukt.

Ein Piezoaktor kann bei einer an den Piezoaktor angelegten elektrischen Spannung eine Verformung ausführen. Insbesondere kann der Piezoaktor eine Längenänderung ausführen. Wenn die elektrische Spannung umgekehrt wird, kann der Piezoaktor die Verformung in eine umgekehrte Richtung ausführen.

WO 2011/099272 A1 zeigt eine H-Brückenschaltung aus vier MOSFET-Schaltern zum Ansteuern eines Piezoaktors, wobei der Querzweig aus einer Serienschaltung von erster Induktivität, Piezoaktor und zweiter Induktivität besteht und wobei zwei weitere MOSFET-Schalter von den Anschlüssen des Piezoaktors zum Massepotential führen.

Andere bekannte H-Brückenschaltungen für Piezoaktoren weisen im Querzweig entweder einen Transformator mit Induktivität und Piezo in Serie an der Sekundärwicklung (DE 10 2009 028915 A1), eine Serienschaltung von Piezo, Kondensator, Widerstand und Induktivität (US 4,628,275) oder eine Induktivität in Serie und einen Kondensator parallel zum Piezo (US 6,011,345) auf.

J Offenbarung der Erfindung

Vor diesem Hintergrund werden mit dem hier vorgestellten Ansatz eine Brückenschaltung zum Ansteuern eines Piezoaktors, ein Verfahren zum Ansteuern eines Piezoaktors, weiterhin ein Steuergerät, das dieses Verfahren verwendet sowie schließlich ein entsprechendes Computerprogrammprodukt gemäß den Hauptansprüchen vorgestellt. Vorteilhafte Ausgestaltungen ergeben sich aus den jeweiligen Unteransprüchen und der nachfolgenden Beschreibung. Es wird eine Brückenschaltung zum Ansteuern eines Piezoaktors vorgestellt, wobei die Brückenschaltung als H-Brücke mit einem Querzweig ausgebildet ist, und zwischen einem ersten Ende des Querzweigs und einem ersten Potenzialanschluss für ein erstes Spannungspotenzial ein erster Schalter angeordnet ist, zwischen dem ersten Ende und einem zweiten Potenzialanschluss für ein zweites Spannungspotenzial ein zweiter Schalter angeordnet ist, und zwischen einem, dem ersten Ende gegenüberliegenden zweiten Ende des Querzweigs und dem ersten Potenzialanschluss ein dritter Schalter angeordnet ist und zwischen dem zweiten Ende und dem zweiten Potenzialanschluss ein vierter Schalter angeordnet ist, wobei die Brückenschaltung die folgenden Merkmale aufweist:

eine Kapazität, die in dem Querzweig angeordnet ist, wobei ein erster Anschluss der Kapazität mit dem ersten Ende verbunden ist;

eine Induktivität, die eine erste Teilinduktivität und eine, mit der ersten Teilinduktivität induktiv gekoppelte zweite Teilinduktivität aufweist, wobei ein erster Anschluss der ersten Teilinduktivität mit einem zweiten Anschluss der Kapazität verbunden ist und ein zweiter Anschluss der ersten Teilinduktivität mit dem zweiten Ende des Querzweigs verbunden ist, und ein erster Anschluss der zweiten Teilinduktivität mit dem zweiten Ende des Querzweigs verbunden ist; und

eine Schnittstelle für den Piezoaktor, wobei ein erster Kontakt der Schnittstelle über einen fünften Schalter schaltbar mit einem zweiten Anschluss der zweiten Teilinduktivität verbunden ist, und der erste Kontakt über einen sechsten Schalter schaltbar mit dem Querzweig verbunden ist, und ein zweiter Kontakt der Schnittstelle mit dem zweiten Potenzialanschluss verbunden ist.

Unter einem Piezoaktor kann ein, auf einem Piezokristall basierendes elektromechanisches Bauelement verstanden werden, das dazu ausgebildet ist, bei einer Änderung eines Spannungspotenzials an dem Piezoaktor eine Längenänderung des Piezokristalls auszuführen. Der Piezoaktor kann elektrische Eigenschaften einer Kapazität und eines ohmschen Widerstands kombinieren. Unter einer Kapazität kann ein Kondensator verstanden werden. Unter einer Induktivität kann eine Spule verstanden werden. Verschiedene Teilinduktivitäten können einen gemeinsamen Kern aufweisen. Über den Kern und/oder die räumliche Nähe der Wicklungen sind die Teilinduktivitäten elektromagnetisch gekoppelt. Ein Schalter kann ein elektronisches Bauteil sein, das dazu ausgebildet ist ansprechend auf ein Signal einen Stromfluss durch das Bauteil zu ermöglichen, beziehungsweise zu sperren. Beispielsweise kann der Schalter ein Transistor oder Mosfet sein.

Die erste Teilinduktivität kann eine gegenläufig zu der zweiten Teilinduktivität ausgerichtete Wicklungsrichtung aufweisen. Durch eine gegenläufige Wicklungsrichtung kann ein Stromfluss in eine erste Richtung durch die erste Teilinduktivität zu einem entgegengesetzten Stromfluss durch die zweite Teilinduktivität führen.

Die Induktivität kann eine dritte Teilinduktivität aufweisen, die elektrisch mit der zweiten Teilinduktivität verbunden und mit den anderen Teilinduktivitäten, hier insbesondere der genannten ersten Teilinduktivität, induktiv gekoppelt ist. Die dritte Teilinduktivität kann zwischen dem sechsten Schalter und der Kapazität angeordnet sein. Durch eine dritte Teilinduktivität kann ein elektrischer Stromfluss beziehungsweise eine elektrische Spannung innerhalb der Brückenschaltung transformiert werden.

Die dritte Teilinduktivität kann in dem Querzweig angeordnet sein. Die dritte Teilinduktivität kann durch eine Anzapfung eine Entwicklung der Induktivität hergestellt werden. Eine Position der Anzapfung kann eine Verstärkung beziehungsweise eine Abschwächung zwischen einer Eingangsspannung und einer Ausgangsspannung beziehungsweise einem Eingangsstrom und einem Ausgangstrom bestimmen.

Die dritte Teilinduktivität kann eine gegenläufig zu der zweiten Teilinduktivität ausgerichtete Wicklungsrichtung aufweisen. Durch die umgekehrte Wicklungsrichtung kann eine Richtungsumkehr beim Stromfluss beziehungsweise eine Potenzialumkehr der Spannung erreicht werden.

Weiterhin wird ein Verfahren zum Ansteuern eines Piezoaktors vorgestellt, wobei der Piezoaktor mit einer Schnittstelle einer Brückenschaltung gemäß dem hier vorgestellten Ansatz verbunden ist, wobei das Verfahren die folgenden Schritte aufweist:

Laden- und/oder Umladen der Kapazität;

Aufrechterhalten einer magnetischen Feldenergie in der Induktivität durch Kommutieren;

Aufladen des Piezoaktors, um den Piezoaktor in eine Richtung zu verformen;

Entladen des Piezoaktors um den Piezoaktor in die entgegengesetzte Richtung zu verformen; und

Ausgleichen von Spannungsunterschieden innerhalb der Brückenschaltung.

Zum Laden der Kapazität kann ein größeres Spannungspotenzial, als bereits an der Kapazität anliegt an die Kapazität angelegt werden. Zum Kommutieren kann eine Stromrichtung umgekehrt werden beziehungsweise ein Spannungspotenzial invertiert werden. Zum Aufladen des Piezoaktors kann ein größeres Spannungspotenzial, als bereits an dem Piezoaktor anliegt an den Piezoaktor angelegt werden. Zum Entladen des Piezoaktors kann ein geringeres Spannungspotenzial, als bereits an dem Piezoaktor anliegt an den Piezoaktor angelegt werden. Zum Ausgleichen von Kreisverlusten können die Spannungsunterschiede innerhalb der Brückenschaltung ausgeglichen werden. Dadurch kann Energie gespart werden.

Das Verfahren kann einen Schritt des Durchführens einer Haltephase umfassen, bei der die im Piezoaktor gespeicherte elektrische Energie erhalten bleibt. Der Schritt des Durchführens der Haltephase kann vor dem Schritt des Ladens und/oder Umladens ausgeführt werden. Im Schritt des Durchführens der Haltephase können der fünfte und sechste Schalter geöffnet sein, und/oder der erste, zweite, dritte und vierte Schalter geöffnet sein.

Im Schritt des Ladens können der erste Schalter und der vierte Schalter leitend geschalten werden.

Im Schritt des Kommutierens können der erste Schalter, der vierte Schalter und der fünfte oder sechste Schalter leitend geschalten werden.

Im Schritt des Aufladens können der vierte Schalter und der sechste Schalter leitend geschalten werden.

Im Schritt des Entladens können der vierte Schalter und der fünfte Schalter leitend geschalten werden.

Im Schritt des Ausgleichens können der zweite Schalter und/oder der dritte Schalter leitend geschalten werden oder der erste Schalter und/oder der vierte Schalter leitend geschalten werden.

Das Verfahren kann einen Schritt des Haltens aufweisen, in dem alle Schalter sperrend geschalten werden. Dadurch kann eine gewünschte Wartezeit in den Ablauf des Verfahrens eingebracht werden. Beispielsweise kann hier durch die Haltezeit einer Pulsbreitenmodulation durchgeführt werden.

Der hier vorgestellte Ansatz schafft ferner ein Steuergerät, das ausgebildet ist, um die Schritte einer Variante eines hier vorgestellten Verfahrens in entsprechenden Einrichtungen durchzuführen bzw. umzusetzen. Auch durch diese Ausführungsvariante der Erfindung in Form eines Steuergeräts kann die der Erfindung zugrunde liegende Aufgabe schnell und effizient gelöst werden.

Unter einem Steuergerät kann vorliegend ein elektrisches Gerät verstanden werden, das Sensorsignale verarbeitet und in Abhängigkeit davon Steuer- und/oder Datensignale ausgibt. Das Steuergerät kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen des Steuergeräts beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Von Vorteil ist auch ein Computerprogrammprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann und zur Durchführung, Umsetzung und/oder Ansteuerung der Schritte des Verfahrens nach einer der vorstehend beschriebenen Ausführungsformen verwendet wird, insbesondere wenn das Programmprodukt oder Programm auf einem Computer oder einer Vorrichtung ausgeführt wird. Vorteilhaft ist auch ein maschinenlesbares Speichermedium mit einem darauf gespeicherten entsprechenden Computerprogramm.

Der hier vorgestellte Ansatz wird nachstehend anhand der beigefügten Zeichnungen beispielhaft näher erläutert. Es zeigen:

Fig. 1 ein Blockschaltbild eines Steuergeräts zum Ansteuern eines Piezoaktors gemäß einem Ausführungsbeispiel der vorliegenden Erfindung;

Fig. 2 ein Schaltschema einer Brückenschaltung zum Ansteuern eines Piezoaktors gemäß einem Ausführungsbeispiel der vorliegenden Erfindung;

Fig. 3 ein Schaltschema einer Brückenschaltung zum Ansteuern eines Piezoaktors gemäß einem weiteren Ausführungsbeispiel der vorliegenden Erfindung;

Fig. 4 ein Ablaufdiagramm eines Verfahrens zum Ansteuern eines Piezoaktors gemäß einem Ausführungsbeispiel der vorliegenden Erfindung;

Fig. 5 ein Ablaufdiagramm einer Schaltfolge zum Ansteuern eines Piezoaktors gemäß einem Ausführungsbeispiel der vorliegenden Erfindung;

Fig. 6 einen zeitlichen Verlauf einer Schaltfolge zum Ansteuern eines Piezoaktors gemäß einem Ausführungsbeispiel der vorliegenden Erfindung;

Fig. 7 eine Darstellung eines sinusförmigen Kraftverlaufs erzeugt mit alternierenden positiven und negativen Piezo-Ansteuerimpulsen gemäß einem Ausführungsbeispiel der vorliegenden Erfindung;

Fig. 8 eine Darstellung von Spannungsverläufen an Kapazitäten der Brückenschaltung gemäß einem Ausführungsbeispiel der vorliegenden Erfindung;

Fig. 9 eine Darstellung von Stromverläufen an Kapazitäten und Induktivitäten der Brückenschaltung gemäß einem Ausführungsbeispiel der vorliegenden Erfindung;

Fig. 10 eine Darstellung von Spannungsverläufen an Kapazitäten der Brückenschaltung gemäß einem weiteren Ausführungsbeispiel der vorliegenden Erfindung;

Fig. 11 eine Darstellung von Stromverläufen an Kapazitäten und Induktivitäten der Brückenschaltung gemäß einem weiteren Ausführungsbeispiel der vorliegenden Erfindung;

Fig. 12 eine Darstellung von Spannungsverläufen an Kapazitäten der Brückenschaltung gemäß einem weiteren Ausführungsbeispiel der vorliegenden Erfindung; und

Fig. 13 eine Darstellung von Stromverläufen an Kapazitäten und Induktivitäten der Brückenschaltung gemäß einem weiteren Ausführungsbeispiel der vorliegenden Erfindung.

In der nachfolgenden Beschreibung günstiger Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

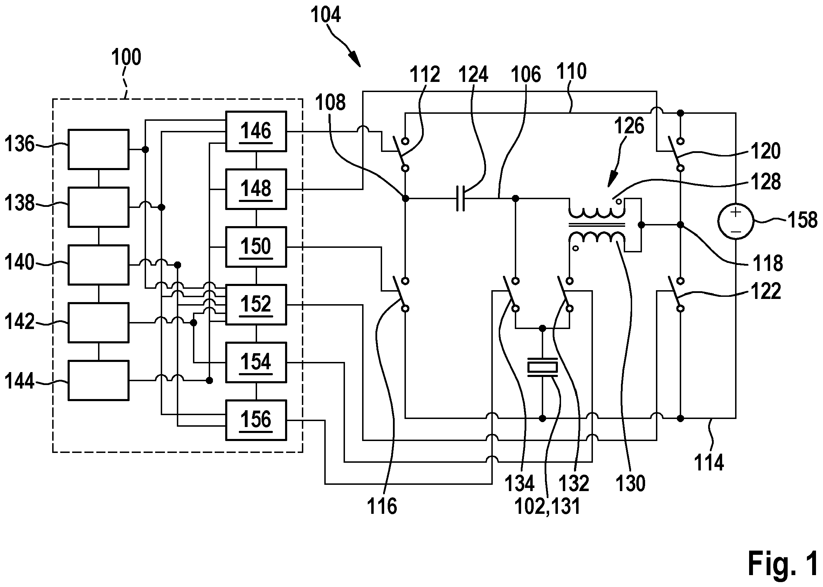

Fig. 1 zeigt ein Blockschaltbild eines Steuergeräts 100 zum Ansteuern eines Piezoaktors 102 gemäß einem Ausführungsbeispiel der vorliegenden Erfindung. Das Steuergerät 100 ist dazu ausgebildet, den Piezoaktor 102 unter Verwendung einer Brückenschaltung 104 zum Ansteuern des Piezoaktors 102 anzusteuern. Die Brückenschaltung 102 ist als H-Brücke 104 mit einem Querzweig 106 ausgebildet. Zwischen einem ersten Ende 108 des Querzweigs 106 und einem ersten Potenzialanschluss 110 für ein erstes Spannungspotenzial ist ein erster Schalter 112 angeordnet. Zwischen dem ersten Ende 108 und einem zweiten Potenzialanschluss 114 für ein zweites Spannungspotenzial ist ein zweiter Schalter 116 angeordnet. Zwischen einem, dem ersten Ende 108 gegenüberliegenden zweiten Ende 118 des Querzweigs 106 und dem ersten Potenzialanschluss 110 ist ein dritter Schalter 120 angeordnet. Zwischen dem zweiten Ende 118 und dem zweiten Potenzialanschluss 114 ist ein vierter Schalter 122 angeordnet. Die Brückenschaltung 104 weist ferner eine Kapazität 124 auf, die in dem Querzweig 106 angeordnet ist, wobei ein erster Anschluss der Kapazität 124 mit dem ersten Ende 108 verbunden ist. Weiterhin weist die Brückenschaltung 104 eine Induktivität 126 auf, die eine erste Teilinduktivität 128 und eine, mit der ersten Teilinduktivität 128 induktiv gekoppelte zweite Teilinduktivität 130 aufweist, wobei ein erster Anschluss der ersten Teilinduktivität 128 mit einem zweiten Anschluss der Kapazität 124 verbunden ist und ein zweiter Anschluss der ersten Teilinduktivität 128 mit dem zweiten Ende 118 des Querzweigs 106 verbunden ist. Ein erster Anschluss der zweiten Teilinduktivität 130 ist mit dem zweiten Ende 118 des Querzweigs 106 verbunden. Der Piezoaktor ist mit einer Schnittstelle 131 der Brückenschaltung 104 verbunden. Ein erster Anschluss des Piezoaktors 102 ist über einen fünften Schalter 132 schaltbar mit einem zweiten Anschluss der zweiten Teilinduktivität 130 verbunden. Weiterhin ist der erste Anschluss des Piezoaktors 102 über einen sechsten Schalter 134 schaltbar mit dem Querzweig 106 verbunden. Ein zweiter Anschluss des Piezoaktors 102 ist mit dem zweiten Potenzialanschluss 114 verbunden.

Die erste Teilinduktivität 128 weist eine gegenläufig zu der zweiten Teilinduktivität 130 ausgerichtete Wicklungsrichtung auf. Dadurch entstehen bei einem gleich gerichteten Stromfluss durch beide Teilinduktivitäten 128, 130 entgegengerichtete elektromagnetische Felder. Ebenso wird durch einen Stromfluss in einer der Teilinduktivitäten 128, 130 ein dem Stromfluss entgegengerichteter Stromfluss in der anderen der Teilinduktivitäten 128, 130 induziert.

Das Steuergerät 100 zum Ansteuern des Piezoaktors 102 weist eine Einrichtung 136 zum Laden, eine Einrichtung 138 zum Kommutieren, eine Einrichtung 140 zum Aufladen, eine Einrichtung 142 zum Entladen und eine Einrichtung 144 zum Ausgleichen auf.

Im dargestellten Ausführungsbeispiel weist das Steuergerät 100 ferner eine Einrichtung 146 zum Ansteuern des ersten Schalters 112, eine Einrichtung 148 zum Ansteuern des zweiten Schalters 116, eine Einrichtung 150 zum Ansteuern des dritten Schalters 120, eine Einrichtung 152 zum Ansteuern des vierten Schalters 122, eine Einrichtung 154 zum Ansteuern des fünften Schalters 132 und eine Einrichtung 156 zum Ansteuern des sechsten Schalters 134 auf. Die Einrichtungen 146, 148, 150, 152, 154, 156 sind mit ihren zugeordneten Schaltern 112, 116, 120, 122, 132, 134 verbunden und dazu ausgebildet die Schalter 112, 116, 120, 122, 132, 134 entweder elektrisch leitend oder elektrisch sperrend zu schalten.

Die Einrichtung 136 zum Laden ist dazu ausgebildet, die Kapazität 124 zu laden. Dazu werden der erste Schalter 112 und der und der vierte Schalter 122 leitend geschalten. Die Einrichtung 138 zum Kommutieren ist dazu ausgebildet, eine den Piezoaktor 102 zu kommutieren. Dabei wird eine magnetische Feldenergie in der Induktivität 126 erhalten. Dazu werden je nach gewünschter Richtung des elektrischen Stroms der erste Schalter 112, der vierte Schalter 122 und der fünfte 132 oder sechste Schalter 134 leitend geschalten. Die Einrichtung 140 zum Aufladen ist dazu ausgebildet, den Piezoaktor 102 aufzuladen, um den Piezoaktor 102 in eine erste Richtung zu verformen. Dazu werden der vierte Schalter 122 und der sechste Schalter 134 leitend geschalten. Die Einrichtung 142 zum Entladen ist dazu ausgebildet, den Piezoaktor 102 zu entladen, um den Piezoaktor 102 in eine der ersten Richtung entgegengesetzte zweite Richtung zu verformen. Dazu werden der vierte Schalter 122 und der fünfte Schalter 130 leitend geschalten. Die Einrichtung 144 zum Ausgleichen ist dazu ausgebildet, Kreisverluste in der Brückenschaltung 104 auszugleichen, um Energie zu sparen. Dazu werden der zweite Schalter 116 und/oder der dritte Schalter 120 leitend geschalten. Alternativ werden der erste Schalter 112 und/oder der vierte Schalter 122 leitend geschalten.

In Fig. 1 ist sind ferner der erste Potenzialanschluss 110 und der zweite Potenzialanschluss 114 an eine Energieversorgungseinrichtung 158 angeschlossen. Die Energieversorgungseinrichtung 158 stellt eine elektrische Potenzialdifferenz zwischen dem ersten Potenzialanschluss 110 und dem zweiten Potenzialanschluss 114 bereit, um den Piezoaktor 102 zu betreiben.

Piezoelektrische Antriebe 102 in mikroelektromechanischen Systemen (MEMS) und in makroskopischen Geräten (Gerätetechnik) weisen durch das ladungsgesteuerte Wirkprinzip generell einen Vorteil bezüglich des Leistungsbedarfs auf. Im Gegensatz zu elektromagnetischen Antrieben kann eine statische Kraft ohne Stromfluss aufrechterhalten werden.

Piezoelektrische Wandler 100 können vereinfacht als verlustbehaftete Kapazität, beispielsweise als ein Widerstand und eine Kapazität in Reihenschaltung modelliert werden. Zur Erzeugung einer Kraft wird die Kapazität aufgeladen. Die im Kondensator gespeicherte Energie nach dem Aufladevorgang wird durch Gleichung 1.1 beschrieben.

$$E = \frac{1}{2}CU^2 \qquad\qquad\qquad (1.1)$$

Die Spannungsquelle 158 liefert zur Ladung der Kapazität die Ladung Q. Die von der Quelle 158 abgegebene Energie wird durch Gleichung 1.2 beschrieben.

$$E = QU = CU^2 \qquad\qquad (1.2)$$

Die Energiedifferenz, von 50% wird unabhängig von den Eigenschaften des piezoelektrischen Wandlers 102 und der Spannungsquelle 158 während des Ladevorgangs in Wärme umgesetzt und gilt somit als verloren.

Viele Applikationen benötigen zeitlich nicht konstante Kräfte. Piezoelektrische Wandler 102 werden aufgrund der kleinen erzielbaren Auslenkung häufig in mechanischer Resonanz betrieben. Auf diese Weise kann die Amplitude einer Bewegung um Faktoren bis 10.000 erhöht werden. Der Betrieb auf der mechanischen Resonanz erfordert das periodische Umladen der Kapazität. Da der Entladevorgang auf naheliegende Weise ohne externe Leistungszufuhr durch

Kurzschluss realisiert werden kann, wird für die periodische Erregung eine Leistung nach Gleichung 1.3 benötigt.

$$P_s = CU^2 \cdot f \qquad\qquad (1.3)$$

Die zuvor im Kondensator gespeicherte Energie ist in diesem Fall ebenfalls verloren. Bei bipolarer Ansteuerung (+/-U) ist die Leistung entsprechend doppelt so hoch.

Die im Kondensator gespeicherte Energie kann zurückgewonnen werden. Es ist beispielsweise möglich anstelle einer Entladung mittels Kurzschluss, die geladene Kapazität als Energiequelle zu betrachten und die Energie in einen Zwischenspeicher zu übertragen. Dafür können beispielsweise Schaltwandler verwendet werden. Daraus kann sich ein hoher Schaltungsaufwand aus mehreren Induktivitäten, Dioden und ICs ergeben. Vor allem bei Systemen mit hohen Anforderungen an die Minimierung des Bauraums kann dieser Ansatz zu viel Platz verbrauchen. Es ist zusätzlich zu erwarten, dass aus dem Management der Schaltwandler ein zusätzlicher Leistungsbedarf resultiert, der bei Low-Power-Anwendungen den erreichbaren Vorteil verkleinern bzw. neutralisieren kann.

Ebenso kann der piezoelektrische Wandler 102 anfänglich auf herkömmliche Weise durch Schließen des vierten Schalters 122 geladen werden. Dabei entstehen die durch Gleichung 1.2 beschriebenen Verluste. Der Umladevorgang wird jedoch nicht durch dissipatives Entladen und anschließendes Aufladen mittels des ersten Schalters 112 realisiert, sondern durch die Anordnung der Induktivität 126, dem dritten Schalter 120 und einer hier nicht gezeigten Diode bzw. der Induktivität 126, dem zweiten Schalter 116 und einer weiteren hier nicht gezeigten Diode. Das Schließen des dritten Schalters 120 bei positiv geladenem Piezoaktor 102 führt zu einem Stromanstieg in der Induktivität 126. Ohne die Dioden und bei verlustlosen Bauteilen würde eine Schwingung mit der Kreisfrequenz nach Gleichung 1.4 resultieren.

$$\omega = \frac{1}{\sqrt{LC}} \qquad\qquad (1.4)$$

Die Kapazität des Piezoaktors 102 würde periodisch umgeladen werden. Die Funktion der Dioden ist es, diesen Vorgang zu unterbrechen, wenn der Strom die Richtung wechselt. Dies ist der Fall, wenn der Strom wieder den Wert null erreicht. Die Polarität der Ladung am Piezoaktor 102 ist damit umgekehrt wie zu Beginn des Vorgangs. Da zum einen die Dioden einen signifikanten Verlust verursachen und die Induktivität 126 bzw. Kapazität 102 ebenfalls nicht als verlustlos betrachtet werden können, ist nach der Umkehr der Polarität die Amplitude der Spannung niedriger als zuvor. Der "Fehlbetrag" der Ladung wird durch die Versorgungsspannungen ausgeglichen. Bei diesem Vorgang fallen wie bei der regulären Ladung der Kapazität Verluste an.

Durch den hier vorgestellten Ansatz wird ein periodisches Umladen einer Kapazität eines Piezoaktors 102 mit möglichst geringen elektrischen Verlusten durch effiziente Ladungsrückgewinnung ermöglicht. Die Anwendung liegt allgemein in dem Betrieb von Aktoren 102 mit kapazitivem oder piezoelektrischem Wirkprinzip.

Im eingeschwungenen Zustand sind nun drei Positionen des Aktors 102 möglich. Der Piezoaktor kann eine Position mit maximal positiver Auslenkung, eine Nullposition und eine Position mit maximal negativer Auslenkung einnehmen.

Durch eine Pulsmodulation, wie beispielsweise eine Pulsbreitenmodulation sind unter Ausnutzung der Trägheit des zu aktuierenden Systems dadurch beliebige Zwischenpositionen in positiver und negativer Richtung des Aktors 102 möglich.

Es wird nur eine unipolare Stromversorgung 158 benötigt. Durch den hier vorgestellten Ansatz kann eine bipolare Ladung mit symmetrischer Amplitude der Kapazität ohne eine zusätzliche negative Versorgungsspannung bzw. eine Invertierung der Spannung durch Schaltwandler realisiert werden. Es entfallen somit die Verluste für die Erzeugung der negativen Spannung. Des Weiteren ist der Bedarf an Bauelementen geringer.

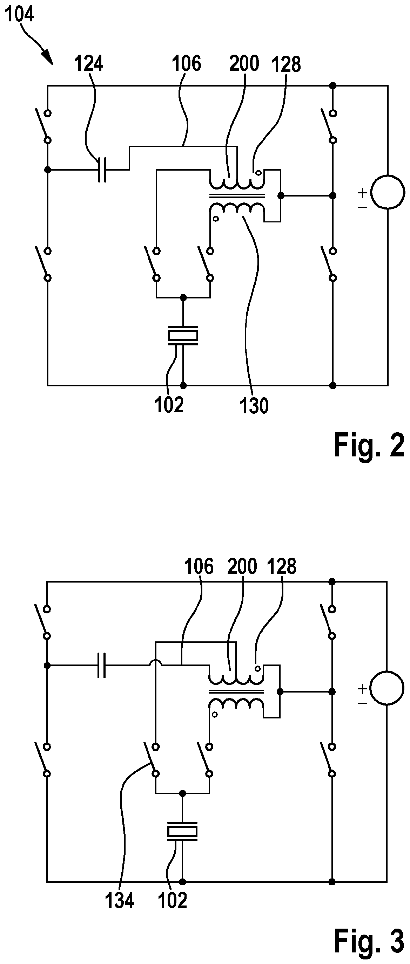

Mit der in der Schaltung 104 verwendeten gekoppelten Induktivität 126 ist es vorteilhaft möglich die Pulsspannung am Piezoaktor 102 in Bezug auf die Versorgungsspannung herauf- oder herabzusetzen, ohne dass weitere Bauelemente nötig sind. Das ist durch eine integrierte Konversion der Antriebsspannung möglich, wie sie in den Figuren 2 und 3 gezeigt ist.

In einem Ausführungsbeispiel sind der erste Schalter 112 bis zum vierten Schalter 122 als klassische "H-Brücke" 104 verschaltet. Im Querzweig 106 befinden sich als Energiezwischenspeicher ein Kondensator "Cstore" 124 und die Teilwicklung Lstore_1 128 einer gekoppelten Induktivität 126. Die dazugehörige zweite Teilwicklung "Lstore_2" 130 weist in Bezug auf "Lstore_1" 128 einen gegenläufigen Wicklungssinn auf und ist mit dem rechten Anschluss von "Lstore_1" 128 verbunden. Der Piezo 102 kann nun mittels zweier Schaltelemente, dem fünften Schalter 132 und dem sechsten Schalter 134 wahlweise mit dem linken Anschluss von "Lstore_1" 128 beziehungsweise "Lstore_2" 130 verbunden werden.

In Verbindung mit dem hier vorgestellten neuartigen Schaltschema kann der Piezo 102 bei minimalen Energieverlusten nun vollständig auf die positive oder negative Betriebsspannung aufgeladen oder komplett entladen werden. In Verbindung mit bekannten Pulsmodulationsverfahren, wie beispielsweise Pulsweitenmodulation, kurz PWM, können im zeitlichen Mittel die gewünschten mechanischen Kräfte des Aktors 102 stufenlos variiert werden, wodurch der Einsatzbereich dieser Piezoaktoransteuerung 104 auf ein weites Feld von Applikationen angewandt werden kann.

Vorteilhaft ist im Gegensatz zu den bekannten vollresonanten Antriebsmodi, dass die Schwingkreisfrequenz unabhängig von der gewünschten Puls-Betriebsfrequenz des Piezos 102 gewählt werden kann.

Insbesondere wird bei dem hier vorgestellten Ansatz die im Piezoaktor 102 enthaltene elektrische Ladung nahezu verlustfrei durch einen teilresonanten Umladevorgang in die Doppelinduktivität 126 "Lstore_1,2" 128, 130 in Form von magnetischer Feldenergie übertragen wird und beim Zurückschwingen ebenfalls teilresonant wieder als elektrische Ladung in den Speicherkondensator Cstore 124 übertragen.

Weiterhin wird durch die Schalteranordnung 104 mit dem fünften Schalter 132 und dem sechsten Schalter 134 in Verbindung mit dem gegenläufigen Wicklungssinn von "Lstore_1" 128 und "Lstore_2" 130 ein wahlfreier Polaritätswechsel für den nächsten Ladezyklus des Piezos 102 ermöglicht.

Fig. 2 zeigt ein Schaltschema einer Brückenschaltung 104 zum Ansteuern eines Piezoaktors 102 gemäß einem Ausführungsbeispiel der vorliegenden Erfindung. Die Brückenschaltung 104 entspricht im Wesentlichen der Brückenschaltung in Fig. 1. Zusätzlich ist zwischen den ersten Anschluss des Piezoaktors 102 und dem zweiten Anschluss der Kapazität 124 eine dritte Teilinduktivität 200 geschaltet. Die dritte Teilinduktivität 200 ist induktiv mit der zweiten Teilinduktivität 130 gekoppelt. Wie die erste Teilinduktivität 128 weist die dritte Teilinduktivität 200 eine gegenläufig zu der zweiten Teilinduktivität 130 ausgerichtete Wicklungsrichtung auf. Der Querzweig 106 ist hier mit einem Punkt zwischen der ersten Teilinduktivität 128 und der dritten Teilinduktivität 200 verbunden.

Mit anderen Worten zeigt Fig. 2 ein Schaltschema einer Variante der Brückenschaltung 104, die dazu ausgebildet ist, die Piezo-Pulsspannung in Bezug auf die Potenzialdifferenz zwischen dem ersten Potenzialanschluss 110 und dem zweiten Potenzialanschluss 114 heraufzusetzen. Diese Variante kann dann angewendet werden, wenn die Versorgungsspannung niedriger als die gewünschte Piezo-Pulsspannung ist.

In Abwandlung von der Grundvariante wird zumindest eine elektrische Anzapfung an der ersten Teilinduktivität "Lstore_1" 128 hinzugefügt. Diese Anzapfung ist nun mit dem Speicherkondensator "Cstore" 124 verbunden. Der linke Spulenanschluss bleibt mit dem fünften Schaltelement 132 verbunden. Durch die Anzapfung entstehen also zwei Teilwicklungen bzw. Induktivitäten 128, 200, die mit "Lstorela" und "Lstore1b" bezeichnet sind.

Die Schaltsequenzabfolge bleibt identisch zur Grundschaltung 104. Dies ist von Vorteil, wenn das Verfahren z. B. in einem ASIC umgesetzt werden soll. Nachfolgend wird eine besonders vorteilhafte Dimensionierung der Bauteilewerte vorgestellt, bei der die teilresonanten Umladezeiten wie in der Ausführung von Fig. 1 erhalten bleiben.

Es sei "r" das Verhältnis der gewünschten Piezo-Pulsspannung zur Betriebsspannung. Daraus ergeben sich bei gegebener Piezokapazität "Cpiezo" und der dazu gewählten Speicherinduktivität "Lstore 2" die folgenden Werte.

$$C_{store} = r^2 \cdot C_{piezo}$$

$$L_{store\_1b} = \frac{L_{store\_2}}{r^2}$$

$$L_{store\_1a} = (r-1)^2 \cdot L_{store\_1b}$$

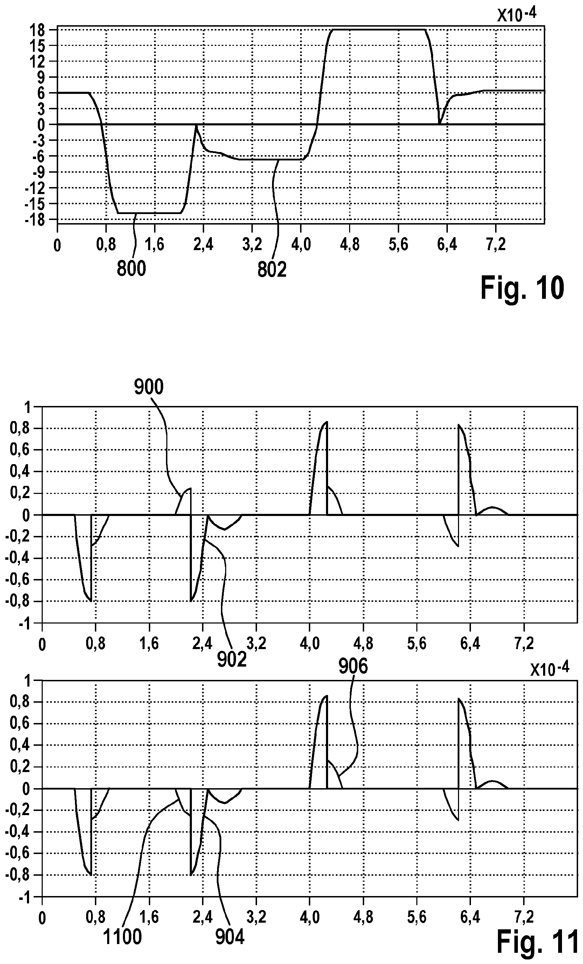

In Fig. 10 und Fig. 11 sind die Simulationsergebnisse einer Piezo-Pulsspannung, die hier beispielhaft um den Faktor drei in Bezug zur Betriebsspannung hochgesetzt wird, dargestellt.

Fig. 3 zeigt ein Schaltschema einer Brückenschaltung 104 zum Ansteuern eines Piezoaktors 102 gemäß einem weiteren Ausführungsbeispiel der vorliegenden Erfindung. Die Brückenschaltung entspricht im Wesentlichen der Brückenschaltung in den Figuren 1 und 2. Im Gegensatz zu Fig. 2 ist die dritte Teilinduktivität 200 hier in dem Querzweig 106 angeordnet. Damit ist der Piezoaktor 102 über den sechsten Schalter 134 mit dem Punkt zwischen der ersten Teilinduktivität 128 und der dritten Teilinduktivität 200 verbunden.

Mit anderen Worten zeigt Fig. 3 ein Schaltschema einer Variante der Brückenschaltung 104, die dazu ausgebildet ist, die Piezo-Pulsspannung in Bezug auf die Potenzialdifferenz zwischen dem ersten Potenzialanschluss 110 und dem zweiten Potenzialanschluss 114 herunterzusetzen. Diese Variante kann dann angewendet werden, wenn die Versorgungsspannung höher als die gewünschte Piezo-Pulsspannung ist.

In Abwandlung von der Grundvariante wird zumindest eine elektrische Anzapfung an der Teilinduktivität "Lstore_1" 128 hinzugefügt. Diese Anzapfung ist nun mit dem fünften Schaltelement 132 verbunden. Der linke Spulenanschluss bleibt mit dem Speicherkondensator "Cstore" 124 verbunden. Durch die Anzapfung entstehen also zwei Teilwicklungen bzw. Induktivitäten 128, 200, die mit "Lstorela" und "Lstore1b" bezeichnet sind.

Auch hier bleibt die Schaltsequenzabfolge identisch zur Grundschaltung. Dies ist von Vorteil, wenn das Verfahren z. B. in einem ASIC umgesetzt werden soll.

Nachfolgend wird eine besonders vorteilhafte Dimensionierung der Bauteilewerte vorgestellt, bei der die teilresonanten Umladezeiten wie in der Ausführung von Fig. 1 erhalten bleiben.

Es sei "r" das Verhältnis der gewünschten Piezo-Pulsspannung zur Betriebsspannung. Daraus ergeben sich bei gegebener Piezokapazität "Cpiezo" und der dazu gewählten Speicherinduktivität "Lstore_2" die folgenden Werte.

$$C_{store} = r^2 \cdot C_{piezo}$$

$$L_{store\_1a} = \left(\left(\frac{1}{r}\right) - 1\right)^2 \cdot L_{store\_2}$$

$$L_{store\_1b} = L_{store\_2}$$

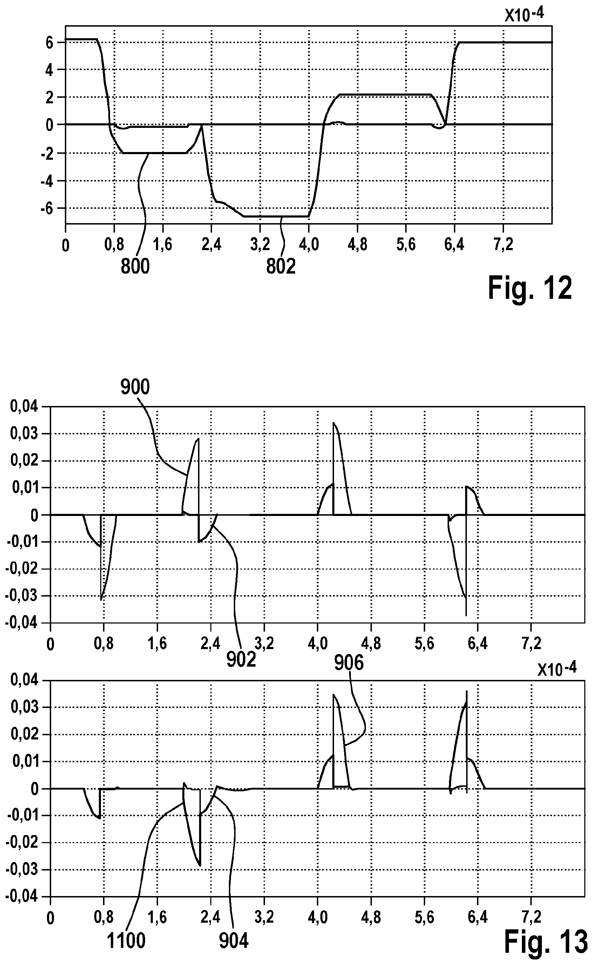

In Fig. 12 und Fig. 13 sind die Simulationsergebnisse einer Piezo-Pulsspannung, die hier beispielhaft um den Faktor 1/3 in Bezug zur Betriebsspannung heruntergesetzt wird, dargestellt.

Für den Fall, dass die Piezo Pulsspannung größer als die Versorgungsspannung ist, ergibt sich als weiterer Vorteil, dass die Schaltelemente der H-Brücke 104 nur mit der Betriebsspannung belastet werden und nur die Schaltelemente direkt am Piezo 102 für die dort anliegende höhere Spannung ausgelegt sein müssen, was vorteilhaft für eine ASIC-Umsetzung für z. B. Consumer Anwendungen ist.

Wird die gekoppelte Induktivität 126 mit einer Anzapfung versehen, dann kann die am Piezoaktor 102 anliegende Pulsspannung ohne zusätzlichen Schaltungsaufwand heraufgesetzt oder herabgesetzt werden. Somit ergibt sich vorteilhaft ein weiterer Freiheitsgrad, wenn die Betriebsspannung und die für den Betrieb notwendige Piezoaktor-Betriebsspannung voneinander verschieden sind. Da hier das gleiche teilresonante Verfahren angewandt wird, bleibt die hohe Konversionseffizienz des Verfahrens vollständig erhalten. Die Spannungskonversion kann auch mit einem zusätzlichen (externen) DC/DC-Konverter bewerkstelligt werden. Dadurch werden jedoch weitere Bauteile benötigt, was teurer ist und auch den Gesamtwirkungsgrad verringert. Bei dem hier vorgestellten Ansatz geschieht die Spannungskonversion intrinsisch in der Schaltung ohne Zusatzaufwand.

In einem Ausführungsbeispiel ist der zweite Potenzialanschluss mit einem Massepotenzial verbunden. Die hier vorgestellte Topologie erlaubt die einseitige Anbindung des Piezoaktors 102 auf das Massepotenzial. Dies ist besonders bei MEMS Aktoren von Vorteil, da dort technologiebedingt meist nur ein gemeinsames Substrat zur Verfügung steht, somit können die Rückleitung und auch ein Anschluss eingespart werden, wodurch weniger Platzbedarf besteht und Kosten eingespart werden können.

Durch das vorgestellte Schaltungsprinzip und dem dazugehörigen Schaltschema 104 treten im Vergleich zu konventionellen H-Brücken keinerlei transiente Umschalt-Spannungsspitzen auf, sodass auf die sonst üblicherweise notwendigen dissipativen RC-Dämpfungsglieder (sog. "Snubber") verzichtet werden kann. Dadurch ergibt sich ein weiterer Kosten- und Wirkungsgradvorteil.

Durch einfaches Herausführen einer Windungsanzapfung von "Lstore_1" 128 und/oder "Lstore_2" eine intrinsische Spannungskonversion beim Umladevorgang möglich. Dabei kann die am Piezo 102 anliegende Pulsspannung höher oder niedriger sein, als die vorhandene Batteriespannung. Das Besondere daran ist, dass beim Zwischenspeichern der Energie in Cstore 124 die Zurücktransformation der Spannung automatisch wieder in der Nähe der Betriebsspannung zu liegen kommt, so das auch der Ausgleich von Schwingkreisverlusten durch Nachladen über die Versorgungsspannung verlustarm möglich ist.

Mit anderen Worten erfüllt also ein einzelnes induktives Bauelement 126 in Verbindung mit der gezeigten Schaltungstopologie 104 und dem dazugehörigen Ansteuerschema mehrere Funktionen gleichzeitig. Es ermöglicht eine verlustarme Energiezwischenspeicherung beim Aufladen oder Entladen des Piezos 102. Durch die beiden gegensinnigen Teilwicklungen ist wahlfrei ein Polaritätswechsel am Piezo 102 möglich. Durch entsprechende Anzapfungen an den Teilwicklungen 128, 200 ist ein intrinsisches Heraufsetzen beziehungsweise Herabsetzen der Piezo Pulsspannung in Bezug auf die Betriebsspannung möglich, wobei alle positiven Eigenschaften der Schaltung 104 erhalten bleiben.

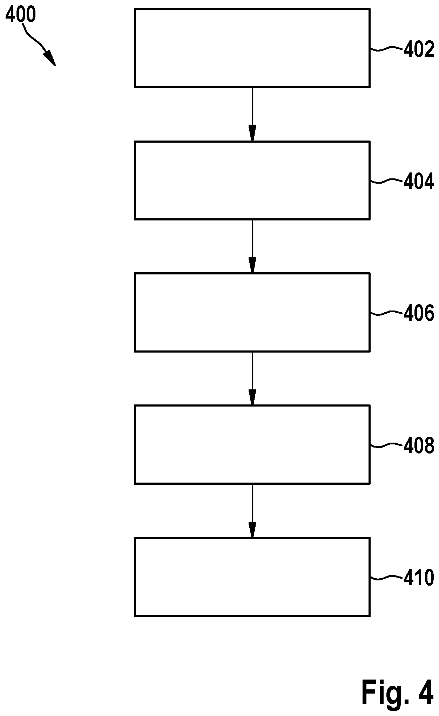

Fig. 4 zeigt ein Ablaufdiagramm eines Verfahrens 400 zum Ansteuern eines Piezoaktors gemäß einem Ausführungsbeispiel der vorliegenden Erfindung. Das Verfahren kann durch ein Steuergerät, wie es in Fig. 1 dargestellt ist, beziehungsweise eine Brückenschaltung gemäß dem hier vorgestellten Ansatz, ausgeführt werden. Das Verfahren 400 weist einen Schritt 402 des Ladens, einen Schritt 404 des Kommutierens, einen Schritt 406 des Aufladens, einen Schritt 408 des Entladens und einen Schritt 410 des Ausgleichens auf. Im Schritt 402 des Ladens wird die Kapazität unter Verwendung einer Betriebsspannung geladen. Im Schritt 404 des Kommutierens wird eine Stromflussrichtung umgekehrt, um eine magnetische Feldenergie in der Induktivität aufrechtzuerhalten. Im Schritt 406 des Aufladens wird der Piezoaktor aufgeladen, um den Piezoaktor in eine Richtung zu verformen. Im Schritt 408 des Entladens wird der Piezoaktor entladen, um den Piezoaktor in die entgegengesetzte Richtung zu verformen. Im Schritt 410 des Ausgleichens werden Kreisverluste ausgeglichen, um Energie zu sparen.

In einem Ausführungsbeispiel weist das Verfahren 400 einen Schritt des Haltens auf, in dem alle Schalter sperrend geschalten werden, um eine vorgegebene und/oder erwünschte Pause einzuhalten.

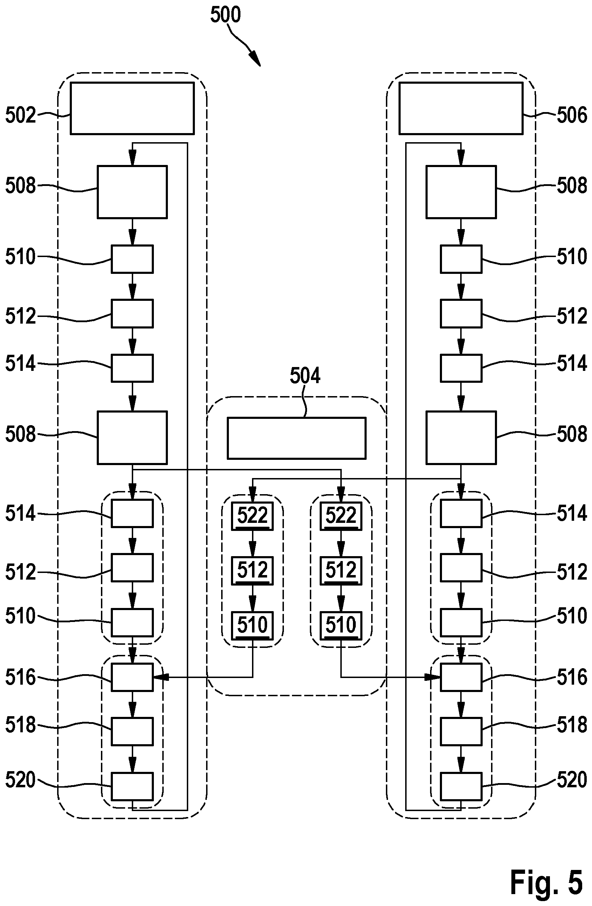

Mit andern Worten zeigt Fig. 5 ein rekuperatives Ansteuerschema 500 für den Betrieb von Piezoaktoren mit integrierter Konversion der elektrischen

Antriebsspannung. Das Ansteuerschema 500 kann auf einem Steuergerät, wie es in Fig. 1 dargestellt ist, ausgeführt werden.

Der Umpolvorgang 404 wird nicht über zumindest eine Diode, sondern aktiv durch die Schaltelemente synchron bewerkstelligt. Das Umpolen oder Kommutieren 404 erfolgt entweder im Stromnulldurchgang, was als "Zero-current switching" bezeichnet werden kann, oder im spannungsfreien Zustand, was als "Zero-voltage-switching" bezeichnet werden kann. Dadurch entfallen die Dioden und somit die Verluste an den Dioden.

Da der Umladevorgang des Piezoaktors unabhängig von der Güte der Implementierung Verlusten unterliegt, ist es von Vorteil auch den Nachladevorgang beziehungsweise das "Auffüllen" der Ladung nach der Umpolung ebenfalls mit einem induktiven Bauelement zu realisieren. Bei dem hier vorgestellten Ansatz wird eine gekoppelte Induktivität bzw. ein Transformator verwendet. Durch eine geeignete Dimensionierung der Induktivität beziehungsweise Teilinduktivitäten führt der Stromfluss zu geringeren Verlusten, als die Gleichungen 1.1 bis 1.3 erwarten lassen.

Durch die besondere Topologie und Verwendung der gekoppelten Induktivität ist nach jedem Umladevorgang die Ladungspolarität des Aktors im nächsten Schaltzyklus frei aus den drei Zuständen maximal positiv, entladen und maximal negativ wählbar. Ein unterbrechungsfreies, periodisches Umpolen für die Funktion ist also nicht mehr notwendig. Dadurch sind ternäre Pulsabfolgen am Aktor möglich. In Kombination mit einer geeigneten Pulsmodulation, wie beispielsweise einer Pulsbreitenmodulation sind unter Ausnutzung der Trägheit des zu aktuierenden Systems beliebige mechanische Zwischenpositionen zwischen den positiven und negativen Maximalpositionen des Aktors möglich. Dies erweitert das Einsatzgebiet auch auf nichtresonant betriebene Aktorsysteme, da bei genügend hoher Pulsfolgefrequenz eine quasistatische Aktor Positionierung ermöglicht wird.

Fig. 5 zeigt ein Ablaufdiagramm mehrerer Schaltfolgen 500 zum Ansteuern eines Piezoaktors gemäß einem Ausführungsbeispiel der vorliegenden Erfindung. In dem Ablaufdiagramm sind mehrere mögliche Schaltfolgen 500 dargestellt. Die Schaltfolgen sind in eine erste Sequenzabfolge 502 für Piezo-Pulse mit negativer Polarität, eine zweite Sequenzabfolge 504 für Polaritätswechsel und eine dritte Sequenzabfolge 506 für Piezo-Pulse mit positiver Polarität eingeteilt.

Die erste Sequenzabfolge 502 beginnt hier mit einer ersten statischen Haltephase 508, in der der Piezoaktor entladen ist, während die Kapazität der Brückenschaltung positiv geladen ist. Die erste Haltephase 508 kann mit variabler Zeitdauer ausgeführt werden. Anschließend an die erste Haltephase 508 erfolgt eine Entladephase 510, in der die Kapazität entladen wird. Dann erfolgt eine Kommutierung 512 und anschließend eine Aufladephase 514 des Piezoaktors. Daran schließt eine zweite statische Haltephase 508 an, in der jetzt der Piezoaktor negativ geladen ist, während die Kapazität entladen ist. Die zweite Haltephase 508 kann mit variabler Zeitdauer ausgeführt werden.

Nach der zweiten statischen Haltephase 508 kann auf die zweite Sequenzabfolge 504 gewechselt werden. Ebenso kann in der ersten Sequenzabfolge 502 verblieben werden. In der ersten Sequenzabfolge 502 folgt auf die zweite statische Haltephase 508 eine erneute Aufladephase 514 des Piezoaktors, auf die eine Kommutierung 512 folgt. Nach der Kommutierung 512 erfolgt eine Ladephase 510 der Kapazität. Daran anschließend werden drei Phasen 516, 518, 520 durchlaufen, in denen Kreisverluste ausgeglichen werden sowie parasitäre Stromflüsse unterdrückt werden.

Nach den Phasen 516, 518, 520 wird wieder die erste statische Haltephase 508 durchlaufen, in welcher der Piezoaktor entladen und die Kapazität positiv geladen ist.

In der auf die zweite Haltephase 508 folgenden zweiten Sequenzabfolge 504 für Polaritätswechsel erfolgt eine Entladephase 522, in der der Piezoaktor entladen wird. Daran anschließend erfolgt eine Kommutierung 512. dann folgt wieder eine Ladephase 510 der Kapazität. Dann wird in die dritte Sequenzabfolge 506 gewechselt.

In der dritten Sequenzabfolge 506 erfolgen anschließend an die zweite Sequenzabfolge 504 zuerst drei Phasen 516, 518, 520 zum Vermeiden von Kreisverlusten und unterdrücken von parasitären Stromflüssen. Daran anschließend erfolgt eine dritte Haltephase 508 in der der Piezoaktor entladen und die Kapazität negativ geladen ist.

Anschließend an die dritte Haltephase 508 erfolgt eine Entladephase 510, in der die Kapazität entladen wird. Dann erfolgt eine Kommutierung 512 und anschließend eine Aufladephase 514 des Piezoaktors. Daran schließt eine vierte statische Haltephase 508 an, in der jetzt der Piezoaktor positiv geladen ist, während die Kapazität entladen ist.

Nach der vierten statischen Haltephase 508 kann auf die zweite Sequenzabfolge 504 gewechselt werden. Ebenso kann in der dritten Sequenzabfolge 506 verblieben werden. In der dritten Sequenzabfolge 506 folgt auf die vierte statische Haltephase 508 eine erneute Aufladephase 514 des Piezoaktors, auf die eine Kommutierung 512 folgt. Nach der Kommentierung 512 erfolgt eine Ladephase 510 der Kapazität. Daran anschließend werden wieder die drei Phasen 516, 518, 520 durchlaufen. Diese Abfolge kann beliebig oft durchlaufen werden.

In der auf die vierte Haltephase 508 folgenden zweiten Sequenzabfolge 504 für Polaritätswechsel erfolgt eine Entladephase 522, in der der Piezoaktor entladen wird. Daran anschließend erfolgt eine Kommutierung 512. dann folgt wieder eine Ladephase 510 der Kapazität. Dann wird in die erste Sequenzabfolge 506 gewechselt, wo mit den drei Phasen 516, 518, 520 begonnen wird.

Um die Abfolge der Schaltzustände in Fig. 5 übersichtlich darzustellen, erfolgt zunächst die Definition von zehn notwendigen, unterschiedlichen Schalterzuständen. Hierbei bedeutet geöffnet, dass das Schaltelement elektrisch nicht leitend ist, wohingegen geschlossen bedeutet, dass das Schaltelement elektrisch leitend ist.

Der erste Schaltzustand ist eine statische Haltephase mit beliebiger Zeitdauer. Dabei ist das erste Schaltelement geschlossen, das zweite Schaltelement geschlossen, das dritte Schaltelement geschlossen, das vierte Schalterelement geschlossen, das fünfte Schaltelement geschlossen und das sechste Schaltelement geschlossen.

Der zweite Schaltzustand ist eine Ladephase beziehungsweise Entladephase der Kapazität Cstore. Dabei ist das erste Schaltelement geschlossen, das zweite Schaltelement geöffnet, das dritte Schaltelement geschlossen, das vierte Schaltelement geöffnet, das fünfte Schaltelement geschlossen und das sechste Schaltelement geschlossen.

Der dritte Schaltzustand ist eine Kommutierung zum Aufrechterhalten der magnetischen Feldenergie in der Induktivität Lstore_1 beziehungsweise Lstore_2. Dabei ist das erste Schaltelement geschlossen, das zweite Schaltelement geöffnet, das dritte Schaltelement geschlossen, das vierte Schaltelement geöffnet, das fünfte Schaltelement geschlossen und das sechste Schaltelement geöffnet.

Der vierte Schaltzustand ist eine Aufladephase für den Piezoaktor Cpiezo. Dabei ist das erste Schaltelement geschlossen, das zweite Schaltelement geschlossen, das dritte Schaltelement geschlossen, das vierte Schaltelement geöffnet, das fünfte Schaltelement geschlossen und das sechste Schaltelement geöffnet.

Der fünfte Schaltzustand ist eine Entladephase für den Piezoaktor Cpiezo. Dabei ist das erste Schaltelement geschlossen, das zweite Schaltelement geschlossen, das dritte Schaltelement geschlossen, das vierte Schaltelement geöffnet, das fünfte Schaltelement geöffnet und das sechste Schaltelement geschlossen.

Der sechste Schaltzustand ist erneut eine Kommutierung zum Aufrechterhalten der magnetischen Feldenergie in der Induktivität Lstore_1 beziehungsweise Lstore_2. Dabei ist das erste Schaltelement geschlossen, das zweite Schaltelement geöffnet, das dritte Schaltelement geschlossen, das vierte Schaltelement geöffnet, das fünfte Schaltelement geöffnet, und das sechste Schaltelement geschlossen.

Der siebte Schaltzustand ist zum Vermeiden eines Kurzschlusses über das dritte Schaltelement und das vierte Schaltelement. Dabei ist das erste Schaltelement geschlossen, das zweite Schaltelement geöffnet, das dritte Schaltelement geschlossen, das vierte Schaltelement geschlossen, das fünfte Schaltelement geschlossen und das sechste Schaltelement geschlossen.

Der achte Schaltzustand dient zum Ausgleich von Kreisverlusten. Dabei ist das erste Schaltelement geschlossen, das zweite Schaltelement geöffnet, das dritte Schaltelement geöffnet, das vierte Schaltelement geschlossen, das fünfte Schaltelement geschlossen und das sechste Schaltelement geschlossen.

Der neunte Schaltzustand ist zum Vermeiden eines Kurzschlusses über das erste Schaltelement und das zweite Schaltelement. Dabei ist das erste Schaltelement geschlossen, das zweite Schaltelement geschlossen, das dritte Schaltelement geschlossen, das vierte Schaltelement geöffnet, das fünfte Schaltelement geschlossen und das sechste Schaltelement geschlossen.

Der zehnte Schaltzustand dient erneut zum Ausgleich von Kreisverlusten. Dabei ist das erste Schaltelement geöffnet, das zweite Schaltelement geschlossen, das dritte Schaltelement geschlossen, das vierte Schaltelement geöffnet, das fünfte Schaltelement geschlossen und das sechste Schaltelement geschlossen.

Die Übersichtsgrafik stellt ein Ausführungsbeispiel für eine technisch sinnvolle Schaltabfolge dar.

In der linken Hälfte der Grafik ist der Zyklus der Sequenzabfolge zur Erzeugung von Piezo-Spannungspulsen mit positiver Polarität gezeigt, auf der rechten Seite entsprechend mit negativen Piezo-Spannungspulsen.

Die statischen Haltezustände sind durch Blöcke gekennzeichnet, in denen die elektrische Energie in Form von Ladung vollständig entweder im Piezo oder der Zwischenspeicherkapazität Cstore gehalten wird. Die Zeitdauer dieser Haltezustände kann wahlfrei gestaltet werden und somit können damit die eingangs beschriebenen Pulsmodulationsverfahren angewandt werden.

Die die elektrische Ladung wird zwischen Cpiezo und Cstore mittels eines verlustarmen, teilresonanten Umladevorgangs über die Speicherdoppelinduktivität Lstore_1 und Lstore_2 transferiert.

Besonders erwähnenswert sind dabei die Kommutierungssequenzen, die dafür sorgen, dass bei der Polaritätsumkehr der Stromfluss durch die Doppelinduktivität Lstore_1 und Lstore_2 nicht unterbrochen wird. Dies wird dadurch bewerkstelligt, dass für einen sehr kurzen Zeitabschnitt Cstore parallel zu Cpiezo geschaltet wird. Typischerweise kann das im Bereich der Summe aus Anschaltzeiten und Abschaltzeiten der involvierten Schaltelemente erfolgen. Ohne diese Vorgehensweise würde das kollabierende magnetische Feld zu sehr hohen Induktionsspannungen führen, welche die Schaltelemente gefährden bzw. zu hohen Verlusten führen würden. Wie eingangs bereits erwähnt sind dadurch bei diesem Schaltungskonzept keine zusätzlichen dissipativen RC-Glieder ("Snubber") notwendig. Diese sonst verloren gehende Energie wird nunmehr polaritätsrichtig direkt in Cstore übertragen.

Da alle realen Bauelemente einen unvermeidlichen Restwiderstand besitzen, entstehen kleine Kreisverluste, welche mit den abschließenden Sequenzen ausgeglichen werden. Die Verluste werden dabei polaritätsrichtig über die Betriebsspannung Ub in Form von Ladungsdifferenz ausgeglichen. Als Besonderheit wird dabei automatisch genau nur so viel Energie aus der Betriebsspannung entnommen, sodass beim nächsten Zyklus wieder die gleiche Pulsspannung am Piezo erreicht wird.

Ist keine Änderung der Polarität der Piezo-Pulsspannung gewünscht, so wird der jeweilige Zyklus der jeweiligen rechten bzw. linken Seite wiederholt.

Ist im nächsten Zyklus ein Polaritätswechsel der Piezo-Pulsspannung gewünscht, so werden die Sequenzabfolgen für den Polaritätswechsel verwendet. Hierbei wird der gegensinnige Wicklungssinn der Speicherdoppelinduktivität Lstore1 und Lstore_2 genutzt, um die Polaritätsumkehr beim wiederum teilresonanten Umladevorgang zu bewerkstelligen.

Der verlustarme Energietransfermechanismus, der genutzt wird, besteht aus dem zeitlich optimalen Zusammenschalten der reaktiven Schaltelemente, bestehend aus Cpiezo, Cstore und der Doppelinduktivität Lstore_1 und Lstore_2 zu einem Schwingkreis.

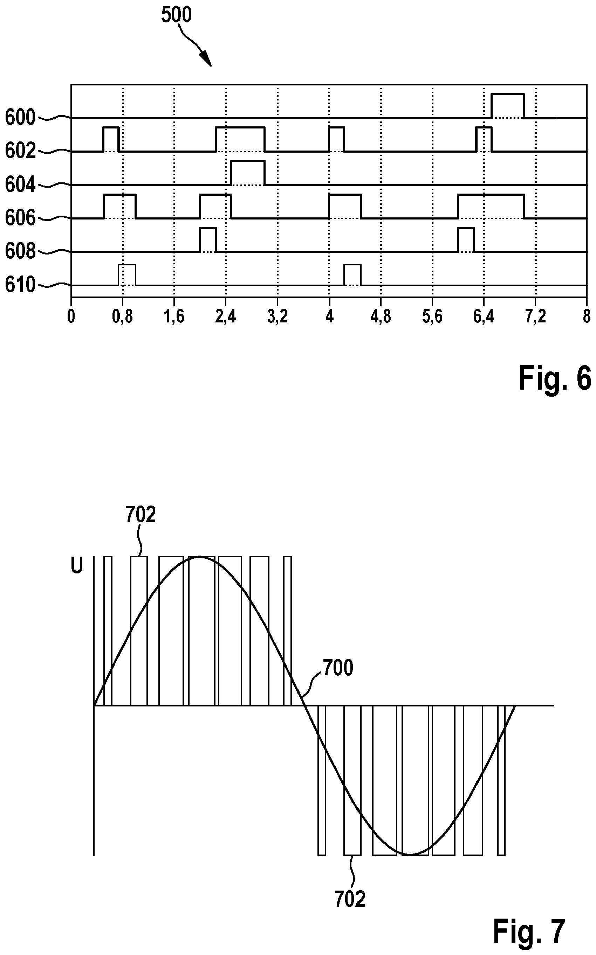

Fig. 6 zeigt einen zeitlichen Verlauf einer Schaltfolge 500 zum Ansteuern eines Piezoaktors gemäß einem Ausführungsbeispiel der vorliegenden Erfindung. Die Schaltfolge 500 ist als Verlauf mehrerer Signalzustände 600, 602, 604, 606, 608, 610 dargestellt. Die Signalzustände 600, 602, 604, 606, 608, 610 sind entlang einer Zeitachse aufgetragen, die bei null Zeiteinheiten beginnt und bei acht Zeiteinheiten endet. Die Signalzustände 600, 602, 604, 606, 608, 610 sind zueinander zeitlich korreliert. Die Signalzustände 600, 602, 604, 606, 608, 610 sind übereinander angeordnet. Dabei repräsentiert ein erster Signalzustand 600 einen Status des ersten Schalters der hier vorgestellten Brückenschaltung. Ein zweiter Signalzustand 602 repräsentiert einen Status des zweiten Schalters. Ein dritter Signalzustand 604 repräsentiert einen Status des dritten Schalters. Ein vierter Signalzustand 606 repräsentiert einen Status des vierten Schalters. Ein fünfter Signalzustand 608 repräsentiert einen Status des fünften Schalters. Ein sechster Signalzustand 610 repräsentiert einen Status des sechsten Schalters. Die Schaltfolge 500 entspricht im Wesentlichen der Schaltfolge in Fig. 5.

Bei null Zeiteinheiten sind alle Schalter offen beziehungsweise elektrisch nicht leitend. Das entspricht der ersten Haltephase in Fig. 5. Dann werden der zweite Schalter 602 und der vierte Schalter 606 gleichzeitig geschlossen beziehungsweise elektrisch leitend geschaltet. Das entspricht der Entladephase der Kapazität in Fig. 5. Während der vierte Schalter 606 geschlossen bleibt, wird der zweite Schalter 602 geöffnet und gleichzeitig der sechste Schalter 610 geschlossen. Das gleichzeitige Öffnen und Schließen entspricht der Kommutierung in Fig. 5. Wenn der vierte Schalter 606 und der sechste Schalter 610 gleichzeitig geschlossen sind, entspricht das der Ladephase in Fig. 5 für den Piezoaktor. Der vierte 606 und der sechste Schalter 610 werden dann gleichzeitig geöffnet. Daraufhin bleiben alle Schalter geöffnet. Das entspricht der zweiten Haltephase in Fig. 5.

Anschließend werden der vierte Schalter 606 und der fünfte Schalter 608 gleichzeitig geschlossen. Das entspricht der Entladephase in Fig. 5 für den Piezoaktor. Während der vierte Schalter 606 geschlossen bleibt, wird der fünfte Schalter 608 geöffnet, während der zweite Schalter 602 geschlossen wird. Das gleichzeitige Öffnen und Schließen entspricht wieder der Kommutierung in Fig. 5. Der geschlossene vierte Schalter 606 und zweite Schalter 602 entspricht wieder einer Ladephase wie in Fig. 5 für die Kapazität beziehungsweise einer Entladephase wie in Fig. 5. Wenn der vierte Schalter 606 geöffnet wird, wird der dritte Schalter 604 geschlossen. Jetzt werden Kreisverluste ausgeglichen. Der zweite Schalter 602 und der dritte Schalter 604 werden gleichzeitig geöffnet. Jetzt sind wieder alle Schalter geöffnet. Das entspricht der dritten Haltephase in Fig. 5.

Bei vier Zeiteinheiten werden wieder der zweite Schalter 602 und der vierte Schalter 606 gleichzeitig geschlossen, was wieder eine Lade- beziehungsweise Entladephase in Fig. 5 entspricht. Während der vierte Schalter 606 geschlossen bleibt, wird der zweite Schalter 602 geöffnet und gleichzeitig der sechste Schalter 610 geschlossen, um zu kommutieren und anschließend den Piezoaktor aufzuladen. Der vierte Schalter 606 und der sechste Schalter 610 werden wieder gleichzeitig geöffnet. Jetzt sind wieder alle Schalter geöffnet. Das entspricht wieder der vierten Haltephase in Fig. 5.

Dann werden wieder der vierte Schalter 606 und der fünfte Schalter 608 gleichzeitig geschlossen. Dadurch wird der Piezoaktor entladen. Während der vierte Schalter 606 geschlossen bleibt, wird der fünfte Schalter 608 geöffnet und gleichzeitig wird der zweite Schalter 602 geschlossen. Das gleichzeitige Öffnen und Schließen ist wieder ein Kommutieren in Fig. 5. Wenn der vierte Schalter 606 und der zweite Schalter 602 geschlossen sind, wird die Kapazität geladen. Nachdem der zweite Schalter 602 wieder geöffnet wird, wird gleichzeitig der erste Schalter 600 geschlossen. Dadurch werden erneut Kreisverluste ausgeglichen. Der erste Schalter 600 und der vierte Schalter 606 werden gleichzeitig geöffnet. Jetzt sind wieder alle Schalter geöffnet, was eine fünfte Haltephase in Fig. 5 repräsentiert.

Mit anderen Worten zeigt Fig. 6 Schaltphasen und Signale 600, 602, 604, 606, 608, 610 der Grundschaltung.

Fig. 7 zeigt eine Darstellung eines sinusförmigen Kraftverlaufs 700, erzeugt mit alternierenden positiven und negativen Piezo-Ansteuerimpulsen 702 gemäß einem Ausführungsbeispiel der vorliegenden Erfindung. Die Ansteuerimpulse 702 weisen drei Intensitätsniveaus auf, die mit maximal positiv, maximal negativ und null beschrieben werden können. Die Ansteuerimpulse 702 werden durch eine Pulsbreitenmodulation moduliert.

Der Kraftverlauf 700 beginnt hier bei null und weist eine Sinusform auf. Während die Ansteuerimpulse 702 positiv sind, verläuft der Kraftverlauf 700 ebenfalls im positiven Bereich. Auf kurze positive Pulse 702 folgen zunehmend länger positive Pulse, bis der Kraftverlauf 700 ein Maximum erreicht. Daraufhin folgen wieder abnehmend kürzere positive Pulse 702, bis der Kraftverlauf 700 in den negativen Bereich wechselt. Hier folgen kurze negative Pulse 702, die zunehmend länger werden, bis der Kraftverlauf 700 ein Minimum erreicht. Daraufhin folgen abnehmend negative Pulse 702, bis der Kraftverlauf 700 wieder bei null angelangt ist.

Der hier gezeigte Kraftverlauf 700 und die Ansteuerimpulse 702 resultieren durch eine Ansteuerung eines Piezoaktors durch ein Verfahren gemäß dem hier vorgestellten Ansatz.

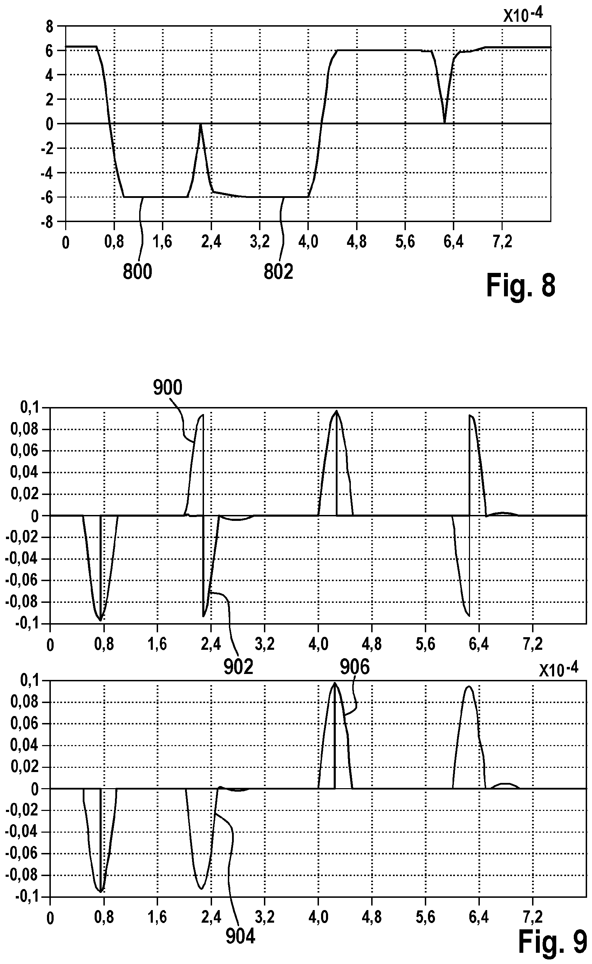

Fig. 8 zeigt eine Darstellung von Spannungsverläufen 800, 802 an Kapazitäten der Brückenschaltung gemäß einem Ausführungsbeispiel der vorliegenden Erfindung. Die Spannungsverläufe 800 sind zeitlich korreliert zu den Schaltfolgen in Fig. 6. Die Spannungsverläufe 800, 802 weisen im Wesentlichen drei Spannungspotenziale, ein positives Spannungspotenzial, ein negatives Spannungspotenzial und ein neutrales Spannungspotenzial auf. Der erste Spannungsverlauf 800 repräsentiert eine Piezospannung 800 beziehungsweise elektrische Spannung eine über den ersten Anschluss und den zweiten Anschluss eines mit der Brückenschaltung verbundenen Piezoaktors. Der zweite Spannungsverlauf 802 repräsentiert eine Kondensatorspannung 802 beziehungsweise eine elektrische Spannung über den ersten Anschluss und den zweiten Anschluss der Kapazität der Brückenschaltung.

Die Piezospannung 800 entspricht in der ersten Haltephase in Fig. 5 dem positiven Spanungspotenzial. Ab dem Zeitpunkt, an dem der zweite Schalter und der vierte Schalter leitend geschalten werden, sinkt die Piezospannung 800 in der Entladephase wie in Fig. 5 ab. In dem Moment, in dem die Piezospannung 800 dem neutralen Spannungspotenzial entspricht, erfolgt die Kommutierung wie in Fig. 5. Dabei wird der zweite Schalter sperrend geschalten und der sechste Schalter leitend geschalten. Die Piezospannung 800 verbleibt nun auf dem neutralen Spannungspotenzial. In der ersten Haltephase wie in Fig. 5 entspricht die Kondensatorspannung 802 dem neutralen Spannungspotenzial. In dem Moment, in dem der sechste Schalter leitend geschalten wird, sinkt die Kondensatorspannung 800 auf das negative Spannungspotenzial ab.

Während der zweiten Haltephase wie in Fig. fünf entspricht die Kondensatorspannung 802 dem negativen Spannungspotenzial und die Piezospannung 800 entspricht dem neutralen Spannungspotenzial. Wenn der vierte Schalter und der fünfte Schalter für die Entladephase wie in Fig. 5 leitend geschalten werden, steigt die Kondensatorspannung 802 bis auf das neutrale Spannungspotenzial an. In dem Moment, an dem die Kondensatorspannung 802 das neutrale Spannungspotenzial erreicht, erfolgt erneut die Kommutierung. Dabei wird der fünfte Schalter sperrend geschalten und zeitgleich der zweite Schalter leitend geschalten. Jetzt sinkt die Piezospannung 800 auf das negative Spannungspotenzial ab, während die Kondensatorspannung 802 das neutrale Spannungspotenzial aufweist.

Während der dritten Haltephase wie in Fig. 5 entspricht die Kondensatorspannung 802 dem neutralen Spannungspotenzial und die Piezospannung 800 dem negativen Spannungspotenzial. Wenn der zweite Schalter und der vierte Schalter leitend geschalten werden, steigt die Piezospannung 800 an. Wenn die Piezospannung 800 das neutrale Spannungspotenzial erreicht hat, erfolgt erneut die Kommutierung. Dabei wird der zweite Schalter sperrend geschalten. Zeitgleich wird der sechste Schalter leitend geschalten. Jetzt steigt die Kondensatorspannung 802 an, bis sie das positive Spannungspotenzial erreicht hat.

In der darauf folgenden vierten Haltephase entspricht die Piezospannung 800 dem neutralen Spannungspotenzial, während die Kondensatorspannung 802 dem positiven Spannungspotenzial entspricht. Wenn der vierte Schalter und der fünfte Schalter leitend geschalten werden, sinkt die Kondensatorspannung 802 ab. Wenn die Kondensatorspannung 802 dem neutralen Spannungspotenzial entspricht, erfolgt die Kommutierung. Dabei wird der fünfte Schalter sperrend geschalten und der zweite Schalter leitend geschalten. Jetzt steigt die Piezospannung 800 von dem neutralen Spannungspotenzial auf das positive Spannungspotenzial an.

In der fünften Haltephase entspricht die Piezospannung 800 dem positiven Spannungspotenzial auf, während die Kondensatorspannung 802 dem neutralen Spannungspotenzial entspricht.

Fig. 9 zeigt eine Darstellung von Stromverläufen 900, 902, 904, 906 an Kapazitäten und Induktivitäten beziehungsweise kapazitiven Bauteilen und induktiven Bauteilen der Brückenschaltung gemäß einem Ausführungsbeispiel der vorliegenden Erfindung. Die Stromverläufe 900, 902, 904, 906 sind zeitlich korreliert zu den Schaltfolgen in Fig. 6. der erste Stromverlauf 900 entspricht einem Stromfluss am Piezoaktor beziehungsweise einem Piezostrom 900. Der zweite Stromverlauf 902 entspricht einem Stromfluss an der Kapazität beziehungsweise einem Kondensatorstrom 902. Der dritte Stromverlauf 904 entspricht einem Stromfluss durch die erste Teilinduktivität beziehungsweise einem ersten Spulenstrom 904. Der vierte Stromverlauf 906 entspricht einem Stromfluss durch die zweite Teilinduktivität beziehungsweise einem zweiten Spulenstrom 906.

In der ersten Haltephase fließt kein Strom, da alle Schalter sperrend geschalten sind. Ab dem Zeitpunkt, an dem der zweite Schalter und der vierte Schalter leitend geschalten werden, fließen der Kondensatorstrom 902 und der erste Spulenstrom 904 in eine negative Stromrichtung. Dabei nimmt der Stromfluss stetig zu. Durch das Kommutieren werden der Kondensatorstrom 902 und der erste Spulenstrom 904 unterbrochen, während der Piezostrom 900 und der zweite Spulenstrom 906 einen Sprung in die negative Stromrichtung ausführen. Der Piezostrom 900 und der zweite Spulenstrom 906 entsprechen unmittelbar nach dem Kommutieren dem Kondensatorstrom 902 und dem ersten Spulenstrom 904 unmittelbar vor dem Kommutieren. Nach dem Kommutieren sinken der Piezostrom 900 und der zweite Spulenstrom 906 stetig, bis kein Strom mehr fließt.

In der zweiten Haltephase fließt kein Strom. Wenn der vierte Schalter und der fünfte Schalter leitend geschalten werden, steigt der Piezostrom 900 in eine positive Stromrichtung, während der erste Spulenstrom 904 in die negative Stromrichtung steigt. Durch das Kommutieren wird der Piezostrom 900 unterbrochen und weist einen Sprung auf null auf. Gleichzeitig weist der Kondensatorstrom 902 einen Sprung in die negative Stromrichtung auf. Dabei entspricht die Stromstärke des Kondensatorstroms 902 der invertierten Stromstärke des Piezostroms 900. Der erste Spulenstrom 904 sinkt nach dem Kommutieren kontinuierlich ab. Während des Ausgleichens der Kreisverluste fließt an der Kapazität sowie an der ersten Induktivität ein geringer negativer Strom.

In der dritten Haltephase fließt kein Strom. Wenn der zweite Schalter und der vierte Schalter erneut leitend geschalten werden, steigen der Kondensatorstrom 902 und der erste Spulenstrom 904 in die positive Stromrichtung an. Durch das Kommutieren werden der Kondensatorstrom 902 und der erste Spulenstrom 904 unterbrochen und weisen einen Sprung auf null auf. Der Piezostrom 900 und der zweite Spulenstrom 906 weisen durch das Kommutieren einen Sprung in die positive Stromrichtung auf. Dabei entspricht die Stromstärke des Piezostroms 900 unmittelbar nach dem Kommutieren der Stromstärke des Kondensatorstroms 902 unmittelbar vor dem Kommutieren. Ebenso entspricht die Stromstärke des zweiten Spulenstroms 906 unmittelbar nach dem Kommutieren der Stromstärke des ersten Spulenstroms 904 unmittelbar vor dem Kommutieren. Der Piezostrom 900 und der zweite Spulenstrom 906 sinken bis auf null ab.

In der vierten Haltephase fließt kein Strom. Wenn der vierte Schalter und der fünfte Schalter leitend geschalten werden, steigt der Piezostrom 900 in die negative Stromrichtung, während der erste Spulenstrom 904 in die positive Stromrichtung steigt. Durch das Kommutieren wird der Piezostrom 900 unterbrochen und weist einen Sprung gegen null auf. Gleichzeitig weist der Kondensatorstrom 902 einen Sprung in die positive Stromrichtung auf. Dabei entspricht die Stromstärke des Kondensatorstroms 902 unmittelbar nach dem Kommutieren der invertierten Stromstärke des Piezostroms 900 unmittelbar vor dem Kommutieren. Nach dem Kommutieren sinkt der Kondensatorstrom 902 bis auf null ab. Der erste Spulenstrom 904 sinkt nach dem Kommutieren erneut bis auf null ab. Während des Ausgleichens der Kreisverluste fließt an der Kapazität sowie an der ersten Teilinduktivität ein geringer positiver Strom.

Fig. 10 zeigt eine Darstellung von Spannungsverläufen 800, 802 an Kapazitäten der Brückenschaltung gemäß einem weiteren Ausführungsbeispiel der vorliegenden Erfindung. Die Brückenschaltung in diesem Ausführungsbeispiel ist dazu ausgebildet, ein niedriges Spannungspotenzial an der Kapazität in ein höheres Spannungspotenzial am Piezoaktor zu wandeln. Im Wesentlichen entsprechen die Spannungsverläufe den Spannungsverläufen in Fig. 8. Im Gegensatz dazu weist hier die Kondensatorspannung 802 einen geringeren Maximalwert, als die Piezospannung 800 auf. Wie in Fig. 8 sind die Spannungsverläufe 800, 802 zeitlich zu den Schaltfolgen in Fig. 6 korreliert. Weiterhin weist die Kondensatorspannung 802 während des Ausgleichens von Kreisverlusten einen geringen Spannungsabfall auf, der während der Haltephasen abgeklungen ist.

Fig. 11 zeigt eine Darstellung von Stromverläufen 900, 902, 904, 906, 1100 an Kapazitäten und Induktivitäten der Brückenschaltung gemäß einem weiteren Ausführungsbeispiel der vorliegenden Erfindung. Die Stromverläufe 900, 902, 904, 906, 1100 sind zeitlich korreliert zu den Schaltfolgen in Fig. 6 und den Spannungsverläufen in Fig. 10. Die Stromverläufe 900, 902, 906 entsprechen im Wesentlichen den Stromverläufen in Fig. 9. Der dritte Stromverlauf 904 entspricht dem Stromfluss durch die erste Teilinduktivität. Der fünfte Stromverlauf 1100 entspricht einem Stromfluss durch die dritte Teilinduktivität beziehungsweise einem dritten Spulenstrom 1100.

Der erste Stromfluss 900 beziehungsweise der Stromfluss am Piezoaktor oder Piezostrom 900 und der zweite Stromfluss 902 beziehungsweise der Stromfluss an der Kapazität oder Kondensatorstrom 902 weisen im Gegensatz zu den Stromflüssen in Fig. 9 eine Amplitudendifferenz zueinander auf. Der Piezostrom 900 weist eine geringere maximale Stromstärke auf, als der Kondensatorstrom. Während des Ausgleichs der Kreisverluste fließt hier ein größerer Strom an der Kapazität, als in Fig. 9.

Der vierte Stromfluss 906 durch die zweite Teilinduktivität weist entsprechend dem Piezostrom 900 gegenüber Fig. 9 eine reduzierte Amplitude auf. Der dritte Stromfluss 904 und der fünfte Stromfluss 1100 weisen unterschiedliche Maximalwerte auf. Während der dritte Stromfluss 904 durch die erste Teilinduktivität einen ähnlichen Maximalwert aufweist, wie in Fig. 9, weist der fünfte Stromfluss 1100 durch die dritte Teilinduktivität einen reduzierten Maximalwert auf.

Im Gegensatz zu den Stromflüssen in Fig. 9 fließt hier nach der zweiten Haltephase, wenn der vierte Schalter und der fünfte Schalter gleichzeitig leitend geschalten werden, der fünfte Stromfluss 1100 in negativer Stromrichtung durch die dritte Teilinduktivität. Der fünfte Stromfluss 1100 wird durch das Kommutieren unterbrochen. Nach dem Kommutieren fließt der dritte Stromfluss 904 in negativer Stromrichtung durch die erste Teilinduktivität. Der dritte Stromfluss 904 weist einen größeren Maximalwert auf, als der fünfte Stromfluss 1100. Während dem Ausgleichen von Kreisverlusten fließt ein geringer Strom in negativer Stromfluss Richtung durch die erste Teilinduktivität.

Nach der vierten Haltephase, wenn der vierte Schalter und der fünfte Schalter leitend geschalten werden, fließt erneut der fünfte Stromfluss 1100 jedoch dieses mal in positiver Stromrichtung durch die dritte Teilinduktivität. Der fünfte Stromfluss 1100 wird wieder durch das Kommutieren unterbrochen. Nach dem Kommutieren fließt der dritte Stromfluss 904 in positive Stromrichtung durch die erste Teilinduktivität. Auch hier weist der dritte Stromfluss 904 einen größeren Maximalwert auf, als der fünfte Stromfluss 1100. Während dem Ausgleichen der Kreisverluste fließt ein geringer Strom in positiver Richtung durch die erste Teilinduktivität.

Fig. 12 zeigt eine Darstellung von Spannungsverläufen 800, 802 an Kapazitäten der Brückenschaltung gemäß einem weiteren Ausführungsbeispiel der vorliegenden Erfindung. Die Brückenschaltung in diesem Ausführungsbeispiel ist dazu ausgebildet, ein hohes Spannungspotenzial an der Kapazität in ein niedrigeres Spannungspotenzial am Piezoaktor zu wandeln. Im Wesentlichen entsprechen die Spannungsverläufe den Spannungsverläufen in Fig. 8. Im Gegensatz dazu weist hier die Piezospannung 800 einen geringeren Maximalwert, als die Kondensatorspannung 802 auf. Wie in Fig. 8 sind die Spannungsverläufe 800, 802 zeitlich zu den Schaltfolgen in Fig. 6 korreliert.

Fig. 13 zeigt eine Darstellung von Stromverläufen 900, 902, 904, 1100 an Kapazitäten und Induktivitäten der Brückenschaltung gemäß einem weiteren Ausführungsbeispiel der vorliegenden Erfindung. Die Stromverläufe 900, 902, 904, 906, 1100 sind zeitlich korreliert zu den Schaltfolgen in Fig. 6 und den Spannungsverläufen in Fig. 12. Die Stromverläufe 900, 902, 906, 1100 entsprechen im Wesentlichen den Stromverläufen in Fig. 11. Der dritte Stromverlauf 904 entspricht dem Stromfluss durch die erste Teilinduktivität. Der fünfte Stromverlauf 1100 entspricht einem Stromfluss durch die dritte Teilinduktivität beziehungsweise dem dritten Spulenstrom 1100. Im Gegensatz zu Fig. 11 weist hier der dritte Strom verlaufen 904 einen geringeren Maximalwert auf, als der fünfte Stromverlauf 1100.

Gemäß der Thomsonsche Schwingungsgleichung beträgt die Zeitdauer einer Schwingungsperiode eines LC-Schwingkreises.

$$T = 2\pi\sqrt{LC}$$

Ohne die Kommutierungssequenzen wird bei dem hier vorgestellten Ansatz, die zeitliche Dauer eines (Teil-)Energietransfers immer in einer Viertelperiode vollzogen. Somit also

$$T_{transfer} = \frac{\pi}{2}\sqrt{LC}$$

Dadurch wird entweder im Stromnulldurchgang oder im Spannungsnulldurchgang geschaltet, sodass die Schaltverluste an den Schaltelementen minimiert werden. Folglich soll diese Zeitdauer möglichst exakt eingehalten werden, um verlustfrei im Stromnulldurchgang zur nächsten Schaltphase umschalten zu können.

In der Praxis kann diese Zeitdauer aber nicht fest gewählt werden, da es unvermeidliche Bauteiletoleranzen gibt, die a priori nicht exakt bekannt sind. Weiterhin werden sich die Verlustmechanismen und die Bauteilewerte über die Temperatur ändern und alle Piezomaterialien haben mehr oder weniger ausgeprägte nichtlineare Eigenschaften, wie beispielsweise Hysterese, veränderliche Eigenkapazität über die angelegte Spannung.

Beim hier vorgestellten Ansatz wird der Stromnulldurchgang im laufenden Betrieb erkannt und ein Weiterschalten in die nächste Schaltphase erst zugelassen, wenn ein Umladezyklus abgeschlossen ist.

Durch eine Analyse der Stromflüsse durch die einzelnen Schaltelemente während der Schaltphasen kann erkannt werden, dass der ideale Umschaltzeitpunkt immer im Stromnulldurchgang des Stroms liegt, der durch das zweite Schalterelement beziehungsweise das vierte Schalterelement fließt.

Zur Strommessung wird kein zusätzliches Bauteil benötigt, es kann der immer vorhandene ohmsche Spannungsabfall an dem entsprechenden Schaltelement genutzt werden. Der absolute Wert dieser Spannung ist dabei völlig unwichtig, da lediglich der Nulldurchgang erkannt wird! Folglich sind die vorhandenen Variationen des Schalterwiderstandes durch Bauteiletoleranzen, Temperatur usw. völlig irrelevant.

Dieser Spannungsabfall ist direkt auf das Nullpotenzial bezogen, d. h., es genügt ein einfacher Komparator zur Nulldurchgangsdetektion, es ist keine Differenzstufe wie bei anderen Stromdetektionsverfahren erforderlich (z. B. wenn der Strom durch den hochgesetzten ersten Schalter bzw. dritten Schalter ermittelt werden müsste).

Weiterhin ist der so ermittelte Spannungsabfall immer positiv, wenn der entsprechende Komparator lediglich in der richtigen Schaltphase freigeschaltet wird, beziehungsweise als Gated Comparator betrieben wird. Dabei ist der Komparator für das zweite Schaltelement nur in der vierten und fünften Schaltphase aktiv und der Komparator für den vierten Schalter nur in der ersten Schaltphase und der zweiten Schaltphase aktiv geschaltet wird. Ein geschalteter Komparator bedeutet schaltungstechnisch so gut wie keinen Zusatzaufwand, da viele kommerziell verfügbare Komparatoren aus diesem Grund meist ohnehin einen Freischalteingang aufweisen.

Der hier vorgestellte Ansatz kann vorteilhafterweise bei Produkten angewendet werden, die folgende eine kleine Bauform aufweisen sollen beziehungsweise mobil sind. Weiterhin kann der hier vorgestellte Ansatz bei Produkten, die einen - geringen Energiebedarf aufweisen sollen. Durch den hier vorgestellten Ansatz kann eine periodische Schwingung mittels einem Piezoantrieb realisiert werden. Ebenso kann der hier vorgestellte Ansatz bei Anwendungen für Leistungsanwendungen, wie beispielsweise Piezoinjektoren bei Kraftstoffeinspritzung oder anderen Piezoaktuatoren verwendet werden. Beispielsweise kann der hier vorgestellte Ansatz bei einem piezoelektrischen Antrieb für ein optisches Bauteil verwendet werden.

Die beschriebenen und in den Figuren gezeigten Ausführungsbeispiele sind nur beispielhaft gewählt. Unterschiedliche Ausführungsbeispiele können vollständig oder in Bezug auf einzelne Merkmale miteinander kombiniert werden. Auch kann ein Ausführungsbeispiel durch Merkmale eines weiteren Ausführungsbeispiels ergänzt werden.

Ferner können die hier vorgestellten Verfahrensschritte wiederholt sowie in einer anderen als in der beschriebenen Reihenfolge ausgeführt werden.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

## Patentansprüche

1. Brückenschaltung (104) zum Ansteuern eines Piezoaktors (102), wobei die Brückenschaltung (104) als H-Brücke (104) mit einem Querzweig (106) ausgebildet ist, wobei zwischen einem ersten Ende (108) des Querzweigs (106) und einem ersten Potenzialanschluss (110) für ein erstes Spannungspotenzial ein erster Schalter (112) angeordnet ist, zwischen dem ersten Ende (108) und einem zweiten Potenzialanschluss (114) für ein zweites Spannungspotenzial ein zweiter Schalter (116) angeordnet ist, zwischen einem, dem ersten Ende (108) gegenüberliegenden zweiten Ende (118) des Querzweigs (106) und dem ersten Potenzialanschluss (110) ein dritter Schalter (120) angeordnet ist, und zwischen dem zweiten Ende (118) und dem zweiten Potenzialanschluss (114) ein vierter Schalter (122) angeordnet ist,
   **dadurch gekennzeichnet, dass**
   die Brückenschaltung (104) die folgenden Merkmale aufweist:

   eine Kapazität (124), die in dem Querzweig (106) angeordnet ist, wobei ein erster Anschluss der Kapazität (124) mit dem ersten Ende (108) verbunden ist;
   eine Induktivität (126), die eine erste Teilinduktivität (128) und eine, mit der ersten Teilinduktivität (128) induktiv gekoppelte zweite Teilinduktivität (130) aufweist, wobei ein erster Anschluss der ersten Teilinduktivität (128) mit einem zweiten Anschluss der Kapazität (124) verbunden ist und ein zweiter Anschluss der ersten Teilinduktivität (128) mit dem zweiten Ende (118) des Querzweigs (106) verbunden ist, und ein erster Anschluss der zweiten Teilinduktivität (130) mit dem zweiten Ende (118) des Querzweigs (106) verbunden ist; und
   eine Schnittstelle (131) für den Piezoaktor (102), wobei ein erster Kontakt der Schnittstelle (131) über einen fünften Schalter (132) schaltbar mit einem zweiten Anschluss der zweiten Teilinduktivität (130) verbunden ist, und der erste Kontakt über einen sechsten Schalter (134) schaltbar mit dem Querzweig (106) verbunden ist, und ein zweiter Kontakt der Schnittstelle (131) mit dem zweiten Potenzialanschluss (114) verbunden ist.

2. Brückenschaltung (104) gemäß Anspruch 1, bei der die erste Teilinduktivität (128) eine gegenläufig zu der zweiten Teilinduktivität (130) ausgerichtete Wicklungsrichtung aufweist.

3. Brückenschaltung (104) gemäß einem der vorangegangenen Ansprüche, bei der die Induktivität (126) eine dritte Teilinduktivität (200) aufweist, die elektrisch mit der zweiten Teilinduktivität (130) verbunden und mit der ersten Teilinduktivität (128) induktiv gekoppelt ist, wobei die dritte Teilinduktivität (200) zwischen dem sechsten Schalter (134) und der Kapazität (124) angeordnet ist.

4. Brückenschaltung (104) gemäß Anspruch 3, bei der die dritte Teilinduktivität (200) in dem Querzweig (106) angeordnet ist.

5. Brückenschaltung (104) gemäß einem der Ansprüche 3 bis 4, bei der die dritte Teilinduktivität (200) eine gegenläufig zu der zweiten Teilinduktivität (130) ausgerichtete Wicklungsrichtung aufweist.

6. Verfahren (400) zum Ansteuern eines Piezoaktors (102), wobei der Piezoaktor (102) mit einer Brückenschaltung (104) gemäß einem der Ansprüche 1 bis 5 verbunden ist, wobei das Verfahren (400) die folgenden Schritte aufweist:

Laden und/oder Umladen (402) der Kapazität (124) der Brückenschaltung (104);
Aufrechterhalten (404) einer magnetischen Feldenergie in der Induktivität (126) der Brückenschaltung (104) durch Kommutieren;
Aufladen (406) des Piezoaktors (102), um den Piezoaktor (102) in eine Richtung zu verformen;
Entladen (408) des Piezoaktors (102) um den Piezoaktor (102) in die entgegengesetzte Richtung zu verformen; und
Ausgleichen von Spannungsunterschieden innerhalb der Brückenschaltung (104).

7. Verfahren (400) gemäß Anspruch 6, mit einem vor dem Schritt des Ladens und/oder Umladens (402) ausgeführten Schritt des Durchführens einer Haltephase, bei der die im Piezoaktor (102) gespeicherte elektrische Energie erhalten bleibt.

8. Verfahren (400) gemäß einem der vorangegangenen Ansprüche bei dem im Schritt (402) des Ladens der erste Schalter (112) und der vierte Schalter (122) leitend geschalten werden.

9. Verfahren (400) gemäß einem der vorangegangenen Ansprüche, bei dem im Schritt (404) des Aufrechterhaltens durch Kommutieren der erste Schalter (112), der vierte Schalter (122) und der fünfte (132) oder sechste Schalter (134) leitend geschalten werden.

10. Verfahren (400) gemäß einem der vorangegangenen Ansprüche, bei dem im Schritt (406) des Aufladens der vierte Schalter (122) und der sechste Schalter (134) leitend geschalten werden.

11. Verfahren (400) gemäß einem der vorangegangenen Ansprüche, bei dem im Schritt (408) des Entladens der vierte Schalter (122) und der fünfte Schalter (132) leitend geschalten werden.

12. Verfahren (400) gemäß einem der vorangegangenen Ansprüche, bei dem im Schritt (410) des Ausgleichens der zweite Schalter (116) und/oder der dritte Schalter (120) leitend geschalten werden oder der erste Schalter (112) und/oder der vierte Schalter (122) leitend geschalten werden.

13. Verfahren (400) gemäß einem der vorangegangenen Ansprüche, mit einem Schritt (508) des Haltens, in dem alle Schalter (112, 116, 120, 122, 132, 134) sperrend geschalten werden.

14. Steuergerät (100) zum Ansteuern eines Piezoaktors (102), wobei das Steuergerät (100) dazu ausgebildet ist, alle Schritte eines Verfahrens gemäß einem der Ansprüche 6 bis 13 durchzuführen.

15. Computerprogramm, das dazu eingerichtet ist, alle Schritte eines Verfahrens gemäß einem der Ansprüche 6 bis 13 durchzuführen.

**Claims**

1. Bridge circuit (104) for driving a piezo actuator (102), wherein the bridge circuit (104) is in the form of an H bridge (104) with a transverse arm (106), wherein a first switch (112) is arranged between a first end (108) of the transverse arm (106) and a first potential connection (110) for a first voltage potential, a second switch (116) is arranged between the first end (108) and a second potential connection (114) for a second voltage potential, a third switch (120) is arranged between a second end (118) of the transverse arm (106), which second end is situated opposite the first end (108), and the first potential connection (110), and a fourth switch (122) is arranged between the second end (118) and the second potential connection (114), **characterized in that** the bridge circuit (104) has the following features:

a capacitance (124) which is arranged in the transverse arm (106), wherein a first connection of the capacitance (124) is connected to the first end (108);
an inductance (126) which has a first inductance element (128) and a second inductance element (130) which is inductively coupled to the first inductance element (128), wherein a first connection of the first inductance element (128) is connected to a second connection of the capacitance (124), and a second connection of the first inductance element (128) is connected to the second end (118) of the transverse arm (106), and a first connection of the second inductance element (130) is connected to the second end (118) of the transverse arm (106); and
an interface (131) for the piezo actuator (102),
wherein a first contact of the interface (131) is connected to a second connection of the second inductance element (130) in a switchable manner by means of a fifth switch (132), and the first contact is connected to the transverse arm (106) in a switchable manner by means of a sixth switch (134), and a second contact of the interface (131) is connected to the second potential connection (114).

2. Bridge circuit (104) according to Claim 1, in which the first inductance element (128) has a winding direction which is oriented so as to run opposite to the second inductance element (130).

3. Bridge circuit (104) according to either of the preceding claims, in which the inductance (126) has a third inductance element (200) which is electrically connected to the second inductance element (130) and is inductively coupled to the first inductance element (128), wherein the third inductance element (200) is arranged between the sixth switch (134) and the capacitance (124).

4. Bridge circuit (104) according to Claim 3, in which the third inductance element (200) is arranged in the transverse arm (106).

5. Bridge circuit (104) according to either of Claims 3 and 4, in which the third inductance element (200) has a winding direction which is oriented so as to run opposite to the second inductance element (130).

6. Method (400) for driving a piezo actuator (102), wherein the piezo actuator (102) is connected to a bridge circuit (104) according to one of Claims 1 to 5, wherein the method (400) has the following steps:

charging and/or recharging (402) the capacitance (124) of the bridge circuit (104);
maintaining (404) a magnetic field energy in the inductance (126) of the bridge circuit (104) by commutation;
charging (406) the piezo actuator (102) in order to deform the piezo actuator (102) in one direction;
discharging (408) the piezo actuator (102) in order to deform the piezo actuator (102) in the opposite direction; and
balancing voltage differences within the bridge circuit (104).

7. Method (400) according to Claim 6, comprising a step of carrying out a holding phase in which the electrical energy which is stored in the piezo actuator (102) is retained, which step is executed before the charging and/or recharging step (402).

8. Method (400) according to one of the preceding claims, in which the first switch (112) and the fourth switch (122) are switched on in the charging step (402).

9. Method (400) according to one of the preceding claims, in which the first switch (112), the fourth switch (122) and the fifth switch (132) or the sixth switch (134) are switched on by commutation in the maintaining step (404).

10. Method (400) according to one of the preceding claims, in which the fourth switch (122) and the sixth switch (134) are switched on in the charging step (406).

**11.** Method (400) according to one of the preceding claims, in which the fourth switch (122) and the fifth switch (132) are switched on in the discharging step (408).

**12.** Method (400) according to one of the preceding claims, in which the second switch (116) and/or the third switch (120) are switched on or the first switch (112) and/or the fourth switch (122) are switched on in the balancing step (410).

**13.** Method (400) according to one of the preceding claims, comprising a holding step (508) in which all of the switches (112, 116, 120, 122, 132, 134) are switched off.

**14.** Controller (100) for driving a piezo actuator (102), wherein the controller (100) is designed to carry out all of the steps of a method according to one of Claims 6 to 13.

**15.** Computer program which is designed to carry out all of the steps of a method according to one of Claims 6 to 13.

**Revendications**

**1.** Circuit en pont (104) pour la commande d'un actionneur piézoélectrique (102), dans lequel le circuit en pont (104) est réalisé sous la forme d'un pont en H (104) comportant une branche transversale (106), dans lequel un premier commutateur (112) est disposé entre une première extrémité (108) de la branche transversale (106) et une première borne de potentiel (110) destinée à un premier potentiel de tension, un deuxième commutateur (116) est disposé entre la première extrémité (108) et une deuxième borne de potentiel (114) destinée à un deuxième potentiel de tension, un troisième commutateur (120) est disposé entre une deuxième extrémité (118) de la branche transversale (106) opposée à la première extrémité (108) et la première borne de potentiel (110), et un quatrième commutateur (122) est disposé entre la deuxième extrémité (118) et la deuxième borne de potentiel (114), **caractérisé en ce que** le circuit en pont (104) comporte les éléments caractéristiques suivants :

une capacité (124), qui est disposée dans la branche transversale (106), dans lequel une première borne de la capacité (124) est reliée à la première extrémité (108) ;
une inductance (126), qui comporte une première inductance partielle (128) et une deuxième inductance partielle (130) couplée par induction à la première inductance partielle (128), dans lequel une première borne de la première inductance partielle (128) est reliée à une deuxième borne de la capacité (124) et une deuxième borne de la première inductance partielle (128) est reliée à la deuxième extrémité (118) de la branche transversale (106), et une première borne de la deuxième inductance partielle (130) est reliée à la deuxième extrémité (118) de la branche transversale (106) ; et
une interface (131) destinée à l'actionneur piézoélectrique (102), dans lequel un premier contact de l'interface (131) est relié par l'intermédiaire d'un cinquième commutateur (132) commutable à une deuxième borne de la deuxième inductance partielle (130), et le premier contact est relié par l'intermédiaire d'un sixième commutateur (134) commutable à la branche transversale (106), et un deuxième contact de l'interface (131) est relié à la deuxième borne de potentiel (114).

**2.** Circuit en pont (104) selon la revendication 1, dans lequel la première inductance partielle (128) présente un sens d'enroulement orienté en sens opposé à la deuxième inductance partielle (130).

**3.** Circuit en pont (104) selon l'une quelconque des revendications précédentes, dans lequel l'inductance (126) comporte une troisième inductance partielle (200), qui est électriquement reliée à la deuxième inductance partielle (130) et est couplée par induction à la première inductance partielle (128), dans lequel la troisième inductance partielle (200) est disposée entre le sixième commutateur (134) et la capacité (124).

**4.** Circuit en pont (104) selon la revendication 3, dans lequel la troisième inductance partielle (200) est disposée dans la branche transversale (106).

**5.** Circuit en pont (104) selon l'une quelconque des revendications 3 à 4, dans lequel la troisième inductance partielle (200) présente un sens d'enroulement orienté en sens opposé à la deuxième inductance partielle (130).

**6.** Procédé (400) pour la commande d'un actionneur piézoélectrique (102), dans lequel l'actionneur piézoélectrique (102) est relié à un circuit en pont (104) selon l'une quelconque des revendications 1 à 5, dans lequel le procédé (400) comprend les étapes consistant à :

charger et/ou décharger (402) la capacité (124) du circuit en pont (104) ;

maintenir (404) une énergie de champ magnétique dans l'inductance (126) du circuit en pont (104) par commutation ;

charger (406) l'actionneur piézoélectrique (102) afin de déformer l'actionneur piézoélectrique (102) dans une direction ;

décharger (408) l'actionneur piézoélectrique (102) afin de déformer l'actionneur piézoélectrique (102) dans la direction opposée ; et

compenser les différences de tension à l'intérieur du circuit en pont (104).

7. Procédé (400) selon la revendication 6, comportant une étape, réalisée avant l'étape de charge et/ou de décharge (402), consistant à exécuter une phase de maintien lors de laquelle l'énergie électrique accumulée dans l'actionneur piézoélectrique (102) reste conservée.

8. Procédé (400) selon l'une quelconque des revendications précédentes dans lequel, lors de l'étape (402) de charge, le premier commutateur (112) et le quatrième commutateur (122) sont commutés de manière à être conducteurs.

9. Procédé (400) selon l'une quelconque des revendications précédentes, dans lequel, lors de l'étape (404) de maintien par commutation, le premier commutateur (112), le quatrième commutateur (122) et le cinquième (132) ou sixième commutateur (134) sont commutés de manière à être conducteurs.

10. Procédé (400) selon l'une quelconque des revendications précédentes, dans lequel, lors de l'étape (406) de charge, le quatrième commutateur (122) et le sixième commutateur (134) sont commutés de manière à être conducteurs.

11. Procédé (400) selon l'une quelconque des revendications précédentes, dans lequel, lors de l'étape (408) de décharge, le quatrième commutateur (122) et le cinquième commutateur (132) sont commutés de manière à être conducteurs.

12. Procédé (400) selon l'une quelconque des revendications précédentes, dans lequel, lors de l'étape (410) de compensation, le deuxième commutateur (116) et/ou le troisième commutateur (120) sont commutés de manière à être conducteurs ou le premier commutateur (112) et/ou le quatrième commutateur (122) sont commutés de manière à être conducteurs.

13. Procédé (400) selon l'une quelconque des revendications précédentes, comportant une étape (508) de maintien lors de laquelle tous les commutateurs (112, 116, 120, 122, 132, 134) sont commutés de manière bloquée.

14. Appareil de commande (100) pour la commande d'un actionneur piézoélectrique (102), dans lequel l'appareil de commande (100) est conçu pour mettre en oeuvre toutes les étapes d'un procédé selon l'une quelconque des revendications 6 à 13.

15. Programme d'ordinateur qui est conçu pour mettre en oeuvre toutes les étapes d'un procédé selon l'une quelconque des revendications 6 à 13.

Fig. 1

**Fig. 2**

**Fig. 3**

400

402

404

406

408

410

Fig. 4

Fig. 5

Fig. 6

Fig. 7

Fig. 8

Fig. 9

Fig. 10

Fig. 11

Fig. 12

Fig. 13

**IN DER BESCHREIBUNG AUFGEFÜHRTE DOKUMENTE**

**In der Beschreibung aufgeführte Patentdokumente**

- WO 2011099272 A1
- DE 102009028915 A1
- US 4628275 A
- US 6011345 A